# EUROPÄISCHE PATENTSCHRIFT

(11) **EP 1 926 762 B1**
(45) Veröffentlichungstag und Bekanntmachung des Hinweises auf die Patenterteilung: **07.10.2009**
(21) Anmeldenummer: 06793070.1
(22) Anmeldetag: 30.08.2006
(51) Int. Cl.: C08F 293/00

(54) **VERFAHREN ZUR HERSTELLUNG VON ABA-TRIBLOCKCOPOLYMEREN AUF (METH)ACRYLATBASIS**
PROCESS FOR PREPARING (METH)ACRYLATE-BASED ABA TRIBLOCK COPOLYMERS
PROCEDE DE PRODUCTION DE COPOLYMERES ABA-TRIBLOC A BASE DE (METH)ACRYLATE

(30) Priorität: 22.09.2005 DE 102005045458
(43) Veröffentlichungstag der Anmeldung: 04.06.2008
(73) Patentinhaber: Evonik Röhm GmbH, 64293 Darmstadt (DE)
(72) Erfinder: LÖHDEN, Gerd, 45136 Essen (DE); BALK, Sven, 63457 Hanau (DE); MÄRZ, Monika, 63755 Alzenau (DE); TRÖMER, Christine, 63546 Hammersbach (DE)
(86) Internationale Anmeldenummer: PCT/EP2006/065790
(87) Internationale Veröffentlichungsnummer: WO 2007/033887

(56) Entgegenhaltungen:
- DATABASE WPI Week 200421 Derwent Publications Ltd., London, GB; AN 2004-217265 XP002404891 -& JP 2003 277572 A (KANEKA CORP) 2. Oktober 2003 (2003-10-02)
- LIWEI ZHANG, YONGMING CHEN: "Allyl functionalized telechelic linear polymer and star polymer via RAFT polymerization" POLYMER, Bd. 47, 25. Mai 2006 (2006-05-25), Seiten 5259-5266, XP002403864
- DOTSEVI Y. SOGAH, WALTER R. HERTLER, OWEN W. WEBSTER, GORDON M. COHEN: "Group Transfer Polymerization. Polymerization of Acrylic Monomers" MACROMOLECULES, Bd. 20, Nr. 7, 1987, Seiten 1473-1488, XP002403865

## Beschreibung

Die Erfindung betrifft ein Verfahren zur Herstellung von ABA-Triblockcopolymeren auf (Meth)acrylatbasis mit einer olefinischen Funktionalisierung der A-Blöcke und deren Verwendung zum Beispiel als Präpolymer für polymeranaloge Reaktionen oder als Bindemittel in Dichtmassen.

Maßgeschneiderte Copolymere mit definierter Zusammensetzung, Kettenlänge, Molmassenverteilung usw. sind ein breites Forschungsfeld. Man unterscheidet unter anderem zwischen Gradienten- und Blockpolymeren. Für solche Materialien sind verschiedene Anwendungen denkbar. Im Folgenden sollen einige davon kurz vorgestellt werden.

Blockpolymere haben einen sprunghaften Übergang zwischen den Monomeren in der Polymerkette, der als Grenze zwischen den einzelnen Blöcken definiert ist. Ein übliches Syntheseverfahren für AB-Blockpolymere ist die kontrollierte Polymerisation von Monomer A und zu einem späteren Zeitpunkt die Zugabe von Monomer B. Neben der sequentiellen Polymerisation durch chargenweise Zugabe in das Reaktionsgefäß kann ein ähnliches Ergebnis auch dadurch erzielt werden, dass man bei einer kontinuierlichen Zugabe der beiden Monomere deren Zusammensetzungen zu bestimmten Zeitpunkten sprunghaft ändert.

Als lebende bzw. kontrollierte Polymerisationsmethoden eignen sich neben der anionischen oder der Gruppentransfer-Polymerisation auch moderne Methoden der kontrollierten radikalischen Polymerisation wie z.B. die RAFT-Polymerisation. Der Mechanismus der RAFT-Polymerisation wird in WO 98/01478 bzw. EP 0 910 587 näher beschrieben. Anwendungsbeispiele finden sich in EP1 205 492.

Mit einer neuen Art der Polymerisation ist man dem Ziel maßgeschneiderter Polymere ein gutes Stück näher gekommen. Die ATRP-Methode (atom transfer radical polymerization) wurde in den 1990-er Jahren maßgeblich von Prof. Matyjaszewski entwickelt (Matyjaszewski et al., J.Am.Chem.Soc., 1995, 117, S.5614; WO 97/18247; Science, 1996, 272, S.866). Die ATRP liefert engverteilte (Homo)Polymere im Molmassenbereich von Mₙ=10.000-120.000 g/mol. Ein besonderer Vorteil dabei ist, dass sowohl das Molekulargewicht als auch die Molekulargewichtsverteilung regelbar sind. Als lebende Polymerisation gestattet sie ferner den gezielten Aufbau von Polymerarchitekturen wie beispielsweise statistische Copolymere oder auch Block-Copolymer-Strukturen. Durch entsprechende Initiatoren sind z.B. zusätzlich ungewöhnliche Block-Copolymere und Sternpolymere zugänglich. Theoretische Grundlagen zum Polymerisationsmechanismus sind unter anderem in Hans Georg Elias, Makromoleküle, Band 1, 6.Auflage, Weinheim 1999, S.344 erläutert.

Kontrolliert radikalische Methoden eignen sich insbesondere auch zur gezielten Funktionalisierung - wie zum Beispiel zur Terminierung - von Vinylpolymeren. Besonderes Interesse kommt dabei unter anderem olefinischen Funktionen zu.

Ein besonders wichtiges Anwendungsgebiet für Vinylpolymere mit endständigen funktionellen Gruppen sind vernetzbare Formulierungen, die vielfältige Anwendungsbereiche umfassen können. Diese Anwendungen umfassen sowohl den direkten Einsatz der Produkte wie sie z.B. in Moeller et al. (Polymer Preprints; 46, S. 341f; 2005) für nicht endständig olefinisch funktionalisierte Polymethacrylate beschrieben wird, als auch die polymeranaloge Addition zu z.B. Silyl-, Hydroxy- oder Epoxyfunktionen, die über entsprechende Reaktionen in einer vernetzbaren Formulierung Anwendung finden können. Hydrosilylfunktionalisierte Verbindungen sind mit Wasseranteilen - z.B. aus der Luftfeuchtigkeit - vernetzbar. Hydroxyfunktionen können beispielsweise in der Formulierung mit Isocyanatgruppenhaltigen Polymeren umgesetzt werden und epoxyhaltige Verbindungen mittels der weitreichenden Vielfalt bekannter Reaktionen unter Öffnung des Ringes. Als zweite Komponente in einer solchen Formulierung können beispielsweise Polyurethane, Polyamide, Polyether wie Polethylen- oder Polyproylenoxid, Polyolefine wie Polybutadien oder Polyisopren oder auch Polyester wie Polyethylenterephthalat oder Polycaprolacton verwendet werden. Am weitesten verbreitet bezüglich Dichtmassen in Bauanwendungen sind jedoch Silikone, die über entsprechende Hydrosilylgruppen vernetzt werden.

Alle diese beschriebenen Polymere werden entweder über ionische Polymerisationsverfahren oder durch Polykondensation bzw. -addition hergestellt. In diesen Verfahren ist die Darstellung endgruppenfunktionalisierter Produkte unproblematisch. Im Gegensatz dazu ist die gezielte Funktionalisierung am Kettenende bei der radikalischen Polymerisation nahezu unmöglich. Somit spielen Polystyrole oder Polymethacrylat bis dato in Bezug auf Anwendungen als in der Bautechnik verwendete Dichtmassenformulierungsbestandteile nur eine untergeordnete Rolle. Eine Möglichkeit entsprechende Produkte darzustellen ist jedoch mit der Entwicklung kontrolliert-radikalischer Polymerisationsmethoden wie z.B. der ATRP hinzugekommen. Somit sind auch diese Monomere zum Aufbau entsprechender Polymerarchitekturen inzwischen verfügbar.

Eine weitere mögliche Anwendung für olefinisch terminierte Polymere ist das Ziel, in einer geeigneten Formulierung z.B. Hydrogele zu bilden. Diese Anwendung wird in US 2005/0113543 näher beschrieben. Problem bei terminierten Polymeren dieser Art ist jedoch, dass aufgrund der nur geringen Konzentration reaktiver Gruppen der Vergelungsprozess lange dauert. Auch von Nachteil ist, dass bei freiradikalisch polymerisierten Produkten die Viskosität vor der Vergelung recht hoch sein und somit zu einer zusätzlichen Verlangsamung des Prozesses führen kann.

Eine Möglichkeit, mittels ATRP synthetisierte Poly(meth)acrylate an den Endgruppen olefinisch zu funktionalisieren wird in US 2005/0113543 beschrieben. Nachteile dieses Verfahrens, in dem eine olefinische Gruppe durch einen ungesättigten Initiator und die andere durch eine Substitution des halogenierten Kettenendes mit Organozinnverbindungen unter Übertragung einer Allylgruppe eingeführt werden, sind die zwangsläufige Mehrstufigkeit des Verfahrens, der Einsatz toxikologisch bedenklicher Zinnverbindungen und eine monofunktionelle Initiierung, die die Synthese symmetrischer erfindungsgemäßer ABA-Triblockcopolymere ausschließt.

Die Synthese symmetrisch aufgebauter, terminierter Poly(meth)acrylate mit bifunktionellen Initiatoren unter anschließender Substitution der endständigen Halogenatome mit ungesättigten Alkoholaten wird in EP 0 976 766 bzw. EP 1 179 567 und auch in US 6,274,688 beschrieben. Auch hier ist ein klarer Nachteil in der Zweistufigkeit des Prozesses zu sehen. Außerdem ist die gezielte Synthese von Block- bzw. im Speziellen Triblockcopolymeren nicht Bestandteil der Erfindung. Vielmehr wird in den aufgeführten Patenten gezielt die Herstellung von Homopolymeren oder Copolymeren mit statistischer Verteilung beschrieben.

Die Anwendung eines einstufigen Prozesses zur Synthese olefinisch terminierter Poly(meth)acrylate wird in EP 1 085 027 beschrieben. Durch Zugabe nicht konjugierter Diene zu einer mit einem bifunktionellen ATRP-Intiator gestarteten Polymerisationslösung, wird die Polymerisation abgebrochen und das Produkt terminiert. Genauer beschrieben wird die Methode in EP 1 024 153 und EP 1 153 942. In diesen Schriften wird auch die Verwendung der Materialien als Zwischenstufe zu einer weiteren Umsetzung zu silyl-terminierten Produkten umschrieben. Zur Hydrosilylierung der Produkte und zu Formulierungen, die unter späterer Vernetzung zu Dichtmassen verwendet werden, findet man eine genauere Beschreibung in EP 1 153 942 - und eine aktuelle Beschreibung des Verfahrens wird in EP 1 498 433 beansprucht. In allen diesen Beschreibungen werden ausschließlich rein terminierte Produkte vorgeschlagen. Keines der beschriebenen Polymere weist dabei eine Blockstruktur auf.

Nachteil dieser Produkte gegenüber Polymeren mit mehrfach funktionalisierten, kurzen Außenblöcken ist die höhere Wahrscheinlichkeit, einseitig nicht funktionalisierte Produkte zu erhalten. Ein weiterer Nachteil ist in einer unvollständigen Umsetzung bei Folgereaktionen wie z.B. einer Hydrosilylierung zu sehen. In beiden Fällen erhält man für weitere Folgereaktionen wie zum Beispiel im Aushärtprozess von Dichtmassenformulierungen einen niedrigeren Vernetzungsgrad, der der mechanischen Stabilität und chemischen Beständigkeit entgegenwirkt.

Ein weiterer Vorteil; der erfindungsgemäßen Blockcopolymere gegenüber den terminierten Produkten ist eine bessere Vernetzbarkeit in Formulierungen von Dichtmassen. Diese wird durch eine Verteilung der Funktionalitäten in den Endsegmenten verbessert. Zusätzlich wird jedoch durch eine Verteilung der reaktiven Gruppen auf die Endsegmente eine zu engmaschige Vernetzung ausgeschlossen. Mit Endsegmenten ist ein Kettenabschnitt gemeint, der jeweils maximal 20 Massen-%, bevorzugt maximal 10 Massen-% und ganz besonders bevorzugt maximal 5 Massen-% der gesamten Polymerkette ausmacht. Nachteil von freiradikalisch hergestellten Bindemitteln dieser Art wäre eine statistische Verteilung der funktionellen Gruppen in der Polymerkette. Dies führt zu einer engmaschigen Vernetzung und einer somit verminderten Elastizität der Dichtmasse. Daraus kann auch eine Verschlechterung der Substratbindung resultieren.

Obwohl es bei einer Umsetzung mit einem reinen Terminierungsreagenz unwahrscheinlich ist, wird in EP 1 024 153 von einem Funktionalisierungsgrad 2 2 berichtet. Sollte ein solches Produkt über diesen Syntheseweg verfügbar sein, so kann es sich nur um ein Polymer mit zwei oder mehr Dien-Bausteinen am Kettenende handeln. Die direkte räumliche Nähe der beiden Bausteine kann jedoch nicht als ausreichende Kompensation der oben beschriebenen Nachteile betrachtet werden.

In EP 1 179 545 werden zur Herstellung von Dichtmassen, die unter anderem ein (Meth)acrylat-basierendes Bindemittel enthalten, verschiedene Terminierungen des Polymers vorgeschlagen. So werden ungesättigte Kettenenden durch Substitution der halogenierten Termini mit ionischen Reagenzien aufgegriffen und diese vor den Vernetzungsreaktionen entweder Hydrosilyliert oder als solche mit Acrylatgruppen an dem Coformulierungsmittel vernetzt. Auch beschrieben wird die Substitution zu OHterminerten Produkten, die mit Diisocyanaten coformuliert werden. Es ist jedoch allgemein bekannt, dass solche meist aromatischen OH-tragenden Endgruppen oft instabil sind. Ferner treffen auch auf die in dieser Schrift beschriebenen Produkte die oben beschriebenen Nachteile, einer ausschließlichen Terminierung und einer nötigen zweistufigen Synthese mit einer polymeranalogen Reaktion im zweiten Schritt, zu.

In EP 1 158 006 werden die beschriebenen Konzepte zur Terminierung in mehrfacher Hinsicht erweitert: Zum einen wird die Gruppe der zur Terminierung geeigneten Reagenzien um cyclische Diene wie z.B. Cyclooctadiene erweitert. In dieser Ergänzung ist jedoch keine Erweiterung der Polymerarchitektur zu sehen. Zum anderen ist die Ergänzung der polymeranalogen Reaktionen - wie der oben beschriebenen Hydrosilylierung - um Addtionsreaktionen zu OH- bzw. Aminterminierten Polymeren und um Epoxydierungen beschrieben. Diese Reaktionen sind als solche nicht neu. Entsprechend können solche Reaktionen analog auch mit den in der vorliegenden Schrift beschriebenen funktionalisierten ABA-Triblockcopolymeren vorgenommen werden.

Polymere, die durch einen freiradikalischen Polymerisationsprozess gewonnen werden, zeigen oft Molekularitätsindizes von deutlich über 1,6. Es liegen bei einer solchen Molekulargewichtsverteilung also zwangsläufig sehr kurzkettige und extrem langekettige Polymere im Gesamtprodukt vor. Die kurzkettigen Nebenprodukte können die chemische Beständigkeit des Produktes beeinträchtigen. Langkettige Nebenprodukte führen dagegen zu einer überproportionalen Viskositätszunahme der Polymerschmelze bzw. -lösung. Dieser Effekt wird durch die u.U. als Weichmacher wirksamen niedermolekularen Ketten einer breiten Verteilung keinesfalls ausgeglichen. Diese Nachteile radikalisch polymerisierter, (Meth)acrylat-basierter Bindemittel können insofern gelöst werden, dass durch Anwendung einer kontrollierten Polymerisationsmethode, in Form der atom transfer radical polymerisation, Bindemittel mit sehr engen Molekulargewichtsverteilungen zur Verfügung gestellt werden konnten, die durch den gegenüber freiradikalisch polymerisiert (Meth)acrylaten einen nur geringen Anteil hochmolekularer Bestandteile aufweisen. Diese Bestandteile bewirken in Polymermischungen insbesondere eine Erhöhung der Viskosität.

Neben der ATRP kommen zur Synthese olefinisch funktionalisierter Polymerarchitekuren auch andere Methoden zum Einsatz. Die beiden beschriebenen relevanten Methoden sollen im Folgenden kurz beschrieben werden. Dabei wird eine Abgrenzung von der vorliegenden Erfindung bezüglich der Produkte und auch der Methodik erfolgen. Insbesondere die Vorteile der ATRP gegenüber anderen Verfahren werden dabei herausgestellt:

In DE 38 32 466 wird die unter anderem die Herstellung von P(AMA)-(MMA)-(AMA)-Triblockcopolymeren mittels Gruppentransferpolymerisation (GTP) beschrieben. Zum einen hat sich die GTP aufgrund der Anfälligkeit des Verfahrens gegenüber Verunreinigung und der mit dem Verfahren verbundenen hohen Kosten inzwischen als großtechnisch wenig interessant erwiesen. Zum anderen werden in der Patentschrift ausschließlich Blockcopolymere mit AMA-Homopolymerblöcken beschrieben. Bei den in der Patentschrift beschriebenen Materialien ist dem Fachmann jedoch leicht ersichtlich, dass diese Polymere leicht zu vorzeitigen Vernetzungsreaktionen neigen und somit auch unter Stabilisierung nicht lagerstabil sein können.

Produkte, die den in der vorliegenden Erfindung beschriebenen sehr ähnlich sind, werden in EP 1 268 591 vorgestellt. Es handelt sich dabei um verschiedene Blockcopolymerarchitekturen, die in einem Block unter anderem Allylmethacrylat als Reaktivbaustein über die zwischenzeitliche Bildung von Mizellen zur weiteren Umsetzung zu Mikrogelen enthalten können. Der überwiegende Anteil der vorgestellten Architekturen umfasst jedoch AB-Diblockcopolymere mit einer sich stark unterscheidenden Löslichkeit der beiden Blöcke in dem den Materialien umgebenden Solvent. Jedem Fachmann ist leicht ersichtlich, dass zur Bildung solcher Mikrogele insbesondere AB-Diblockstrukturen von Bedeutung sind. Die Aufführung von ABA-Triblockarchitekturen erscheint daher als nicht erfindungsgemäß. Auch unterscheidet sich die zitierte Erfindung von der vorliegenden insofern, dass bei den in der vorliegenden Schrift beschriebenen Polymeren ein großer Löslichkeitsunterschied zwischen den Blöcken nicht gewollt und eher schädlich ist. Eine Gelierung, wie sie in EP 1 268 591 gezielt hervorgerufen werden soll, ist bei der Verwendung der erfindungsgemäßen Triblockcopolymere eindeutig unerwünscht. Ein dritter entscheidender Unterschied zu EP 1 268 591 ist in der verwendeten Methode zu sehen. In der zitierten Schrift werden ausschließlich Produkte, die mittels reversible addition-fragmentation chain transfer (RAFT) polymerisiert wurden, beschrieben. Diese ebenfalls kontrolliert-radikalische Polymerisationsmethode unterscheidet sich eindeutig von der in dieser Erfindung verwendeten ATRP. Als Initiatoren werden in der RAFT ausschließlich schwefelhaltige Verbindungen, die am Kettenende, bzw. im Fall multifunktionaler Initiatoren in der Kettenmitte eingebaut werden. Nachteil dieser Methode sind die stark riechenden Initiatoren, die bei unvollständigem Umsatz umständlich entfernt werden müssen, und der Einbau des Schwefelfragments in die Kette. Dieses Fragment kann unter Umständen die thermische Haltbarkeit des Polymers reduzieren. Bei Anwendung der ATRP werden jedoch ausschließlich Initiatorfragmente, die wie die verwendeten Monomere aus den Elementen Kohlenstoff, Wasserstoff und Sauerstoff bestehen, in die Polymerkette eingebaut Die erfindungsgemäßen Polymere sind somit vollständig schwefelfrei.

Eine weitere Abgrenzung zu EP 1 268 591 erfolgt über die Zusammensetzung der funktionalisierten Blöcke. Während in den erfindungsgemäßen Polymeren nur möglichst geringe Anteile der Reaktivgruppe angestrebt werden, finden sich dazu in EP 1268591 keine genaueren Angaben. Es ist jedoch anzunehmen, dass die Zahl dieser Gruppen zur Ausbildung eines Mikrogels größer sein kann oder gar sein sollte. Dieser Aspekt verdeutlicht insbesondere auch die sich deutlich unterscheidenden Ansatzpunkte von EP 1 268 591 und der vorliegenden Erfindung.

Eine neue Stufe der Entwicklung sind die im Folgenden beschriebenen Triblockcopolymere. Man unterscheidet zwischen ABC und ABA-Triblockcopolymeren.

ABA-Triblockcopolymere sind wiederum mit 5=Blockcopolymeren der Zusammensetzung ACBCA gleichzusetzen.

Aufgabe war es, Triblockpolymere der Struktur ABA darzustellen. Insbesondere besteht der Bedarf an olefinisch terminierten Poly(meth)acrylaten bzw. Poly(meth)acrylaten, die in Ihren Eigenschaften olefinisch terminierten Materialien entsprechen oder sehr nahe kommen. Dies kann zum Beispiel durch den Einbau einer bis weniger Bausteinen mit nicht oder nur wenig polymerisationsaktiven olefinischen Gruppen am Kettenende erreicht werden. Mit Kettenenden wird das Endsegment eines Polymers bezeichnet, das max. 1-20 Gew.-% des Gesamtgewichtes des Polymeren ausmacht,

Poly(meth)acrylate, die ungesättigte Kettenenden führen bzw. ungesättigt terminierte Poly(meth)acrylate eignen sich als Präpolymere für Vernetzungen, zur weiteren Umsetzung der Kettenenden mit dem Ziel, bis dato nichts zugängliche Funktionalitäten anzuknüpfen oder z.B. für spezielle biologische Reaktionen.

Eine weitere Aufgabe der Erfindung ist es, reaktive olefinische Funktionalitäten enthaltene Polymere als Bindemittel derart zur Verfügung zu stellen, dass die Zahl möglichst gering gehalten wird. Ein höherer Anteil polarer Gruppen im Bindemittel führt zu einer eventuellen Vergelung oder zumindest zu einer zusätzlichen Erhöhung der Lösungs- bzw. Schmelzviskosität. Diese Aufgabe kann durch die gezielte Anbringung der Funktionalitäten an das Kettenende oder in die Nähe desselbigen gelöst werden.

Ein weiterer Gegenstand dieser Erfindung ist die Funktionalisierung von kurzen A-Blöcken in ABA-Triblockcopolymeren durch den Einbau geeigneter zweifach ungesättigter Monomere während der letzten Stufe einer sequentiellen Polymerisation. Entscheidend zum Gelingen dieses Verfahrens ist, dass die beiden olefinischen Gruppen des Monomers unterschiedliche Polymerisationsaktivitäten aufweisen.

Eine weitere Aufgabe ist es, ein Material mit einer möglichst engen Molekulargewichtsverteilung unter 1,6, bevorzugt unter 1,4, zur Verfügung zu stellen. Auf diese Weise werden sowohl die Anteile höhermolekularer Bestandteile, die u.a. zu einer ungewünschten Erhöhung der Lösungs- bzw. Schmelzviskosität beitragen, als auch die Anteile besonders niedermolekularer Bestandteile, die eine Verschlechterung der Lösungsmittelbeständigkeit des Bindemittels hervorrufen können, minimiert.

In Anbetracht des identifizierten und diskutierten Standes der Technik lag unter anderem die Aufgabe zugrunde, einen Formulierungsbestandteil für Dichtmassen zur Verfügung zu stellen, der eine große Anfangsfestigkeit aufweist, ohne dass eine vorzeitige Vergelung auftritt. Weiterhin sollte eine Verringerung der Viskosität bzw. der Viskositätsstabilität der Schmelze bzw. einer Lösung des Bindemittels bei vorgegebener Verarbeitungstemperatur zur Verbesserung der Verarbeitbarkeit erreicht werden. Ferner betrafen die Aufgaben u.a. einen nur geringen Anteil extrahierbarer Komponenten in der ausgehärteten Dichtmasse und sehr gute Hafteigenschaften gegenüber einer großen Zahl unterschiedlicher Materialien.

Aufgabe der vorliegenden Erfindung ist es daher unter anderem ein Bindemittel für Dichtmassen zur Verfügung zu stellen, dass entweder olefinisch terminiert ist oder aber eine geringe Anzahl freier ungesättigter Gruppen in der Nähe der Kettenenden aufweist. Solche Materialien weisen bei der Formulierung in Dichtmassen eine höhere Elastizität auf. Daraus resultiert auch eine Verbesserung der Haftung auf dem Substrat.

Die Aufgabe wurde gelöst durch das zur Verfügung Stellen von Blockcopolymeren der Zusammensetzung ABA mit ≤4 olefinischen Gruppen in den einzelnen A-Blöcken, dadurch gekennzeichnet, dass Block A ein Copolymer enthaltend olefinisch funktionalisierte (Meth)acrylate und Monomere ausgewählt aus der Gruppe der (Meth)acrylate oder deren Mischungen, und ein

Block B, enthaltend (Meth)acrylate oder deren Mischungen, die keine zusätzliche olefinische Funktion aufweisen,
als ABA-Blockcopolymerisate polymerisiert werden.

Es wurde gefunden, dass auch ABA-Blockcopolymere mit ≤2 ungesättigten Gruppen in den einzelnen A-Blöcken dargestellt werden können.

Es können sowohl den Copolymeren des Blockes A, als auch den Copolymeren des Blockes B 0-50 Gew.-% mittels ATRP polymerisierbare Monomere, die nicht zu der Gruppe der (Meth)acrylate gezählt werden, zugegeben werden.

Eine bevorzugte Ausführungsform stellen Blockcopolymere dar, die bei einer ABA Zusammensetzung ≤4 olefinischen Gruppen in den einzelnen A-Blöcken aufweisen und dabei der Block A ein Copolymer enthaltend olefinisch funktionalisierte (Meth)acrylate und Monomere ausgewählt aus der Gruppe der (Meth)acrylate oder deren Mischungen und optional weitere mittels ATRP polymerisierbare Monomere, die nicht zu der Gruppe der (Meth)acrylate gezählt werden, und ein Block B, enthaltend (Meth)acrylate oder deren Mischungen, die keine olefinische Funktion aufweisen und optional weitere mittels ATRP polymerisierbare Monomere, die nicht zu der Gruppe der (Meth)acrylate gezählt werden, als ABA-Blockcopolymerisate polymerisiert werden, wobei die mittels ATRP polymerisierbaren Monomere auch nur in Block A copolymerisiert werden oder nur in Block B copolymerisiert werden können.

Eine weitere Leistung der vorliegenden Erfindung ist es, parallel dazu Blockcopolymere mit insgesamt deutlich geringeren AMA-Anteilen zu beschreiben und dieses Monomer erstmalig als Bestandteil eines nicht vernetzten Copolymers, das in Folgereaktionen zur Darstellung weiterer Funktionalitäten an den Enden der Polymerkette eingesetzt werden kann, zu beschreiben.

Gegenüber den im Stand der Technik beschriebenen Formulierungen mit olefinisch terminierten Bindemitteln in der Formulierung kann auch in den erfindungsgemäßen Produkten mit einem relevant höheren Funktionalisierungsgrad der Vorteil einer besseren Vernetzbarkeit gesehen werden. Bedingt durch die höhere Zahl reaktiver Gruppen im Kettenendsegment, ist eine Reaktion der ungesättigten Gruppen wahrscheinlicher und eine Vernetzung zu einem vergleichbar engmaschigen Elastomer bzw. zu flexiblen Dichtmasse läuft deutlich schneller ab.

Die möglichen Anwendungen der erfindungsgemäßen Materialien umfassen jedoch nicht nur Bindemittel für Dichtungsmassen oder als Zwischenstufe für die Einführung andersartiger Funktionalitäten. In EP 1 510 550 ist beispielsweise eine Beschichtungszusammensetzung, die untere anderem aus Acrylatpartikeln und Polyurethanen besteht, beschrieben. Ein erfindungsgemäßes Polymer führte in einer entsprechenden Formulierung zu einer Verbesserung der Verarbeitungseigenschaften und zu einer weiteren Alternative eines Vernetzungsmechanismus. Denkbare Anwendungen wären zum Beispiel Pulverlackformulierungen.

Das Spektrum möglicher Anwendungen polymeranaloger Folgerreaktionen ist sehr groß und soll am Beispiel US 8,866,742 verdeutlicht werden. In dieser Schrift wird die statistische und freiradikalische Copolymerisation von MMA und Allylmethacrylat beschrieben. Auf die Nachteile eines solchen Produktes wurde bereits anderorts eingegangen. Anschließend erfolgt jedoch eine Hydrosilylierung dieser Produkte mit sterisch sehr anspruchsvollen Silylresten. Als Anwendung werden Füllstoffe in der Dentalmedizin angegeben. Diese nachträgliche Funtkionalisierung der Polymere grenzt sich von der hier vorliegenden Erfindung dergestalt ab, dass ausschließlich Silylreste verknüpft werden, die aus minimal 12 Siliziumatomen bestehen. Auch der Zweck der vorliegenden Oligosilylreste unterscheidet sich deutlich von einem erfindungsgemäßen Polymer, das nach anschließender Hydrosilylierung mit einem nur ein Si-Atom enthaltenden Silan, als Reaktivkomponente in einer vernetzbaren Formulierung dient.

Die zur Hydrosilylierung verwendeten Komponenten zeichnen sich durch folgende allgemeine Formel aus:

HSi(OR¹)_{b}R²ₐX_{c}

Dabei können die organischen Resten R¹ bzw. R² jeweils identisch oder verschieden zueinander sein. Ferner sind die organischen Reste R¹ und R² ausgewählt aus der Gruppe der aliphatischen Kohlenwasserstoffreste bestehend aus 1 bis 20 Kohlenstoffatomen. Diese Gruppen können entweder linear, verzweigt oder cyclisch sein. R¹ kann dabei auch ausschließlich Wasserstoff sein.

X ist ausgewählt aus der Gruppe der hydrolisierbaren Reste, die ungleich Alkoxy bzw. Hydroxy sind. Dies umfasst unter anderem Halogen-, Acyloxy-, Amino-, Amido-, Mercapto-, Alkenyloxy- und ähnliche hydrolisierbare Gruppen.

Als Beispiele seien HSiCl₃, HSiMeCl₂, HSiMe₂Cl, HSi(OMe)₃, HSiMe(OMe)₂, HSiMe₂(OMe), HSi(OPh)₃, HSiMe(OPh)₂, HSiMe₂(OPh), HSi(OEt)₃, HSiMe(OEt)₂, HSiMe₂(OEt), HSi(OPr)₃, HSiMe(OPr)₂, HSiMe₂(OPr), HSiEt(OMe)₂, HSiEtMe(OMe), HSiEt₂(OMe), HSiPh(OMe)₂, HSiPhMe(OMe), HSiPh₂(OMe), HSiMe(OC(O)Me)₂, HSiMe₂(OC(O)Me), HSiMe(O-N=CMe₂)₂ oder HSiMe₂(O-N=CMe₂) aufgeführt. Wobei die Abkürzungen Me für Methyl-, Ph für Phenyl-, Et für Ethyl- und Pr für iso- bzw. n-Propyl- stehen.

Weiterhin sind a, b und c jeweils ganze Zahlen zwischen 0 und 3. Die Summe a+b+c ist 3.

Hydrosilylierungen von Doppelbindungen sind schon lange Stand der Technik. Auch die Hydrosilylierung von an Polymeren gebundenen Doppelbindungen wurde schon mehrfach beschrieben. Beispiele neueren Datums sind in DE 28 51 456, EP 0 994 172 oder EP 1 024 153 zu finden. Die Hydrosilylierung wird durch Zugabe eines geeigneten Katalysators ermöglicht. Erfindungsgemäß kann jeder dazu geeignete Katalysator einzeln oder in Mischung mit anderen geeigneten Katalysatoren verwendet werden. Die Katalyse kann sowohl homogen als auch heterogen mittels auf einem Trägermaterial wie Alox oder Silica gebundenen Katalysator vorgenommen werden.

Einige wenige Beispiele für zur Hydrosilylierung geeigneter Katalysatoren sind feinverteiltes Platin, Chlorplatinsäure und deren alkoholischen, aldehydischen oder ketonischen Komplexverbindungen, olefinische Platinkomplexe, Platin-divinyltetramethyldiisosiloxan, Rhodium-, Iridium-, Ruthenium- oder Eisentrichlorid, Palladiumdichlorid oder Titanterachlorid bzw. intermediär gebildete Komplexverbindungen der aufgeführten Verbindungen mit Alkoholen, Ketonen oder Aldehyden. Ein besonders bevorzugtes Beispiel ist der sogenannte Karstedt-Katalysator Platin-divinyltetramethyldiisosiloxan. Dieser kann entweder als Lösung eingesetzt werden oder in situ durch Reduktion und Komplexierung aus Hexachlorplatinsäure und Divinyltetramethyldisiloxan gebildet werden.

Bezogen auf die umzusetzenden olefinischen Gruppen werden die Katalysatoren in einem Bereich zwischen 10⁻² und 10⁻⁷ Mol-% - bevorzugt zwischen 10⁻⁴ und 10⁻⁶ eingesetzt.

Die Blockcopolymere der Zusammensetzung ABA bestehen zu weniger als 20% des Gesamtgewichtes, bevorzugt weniger als 10%, und insbesondere zu weniger als 5% aus A-Blöcken.

ABA-Triblockcopolymere sind wiederum mit 5-Blockcopolymeren der Zusammensetzung ACBCA gleichzusetzen. Wobei diese Blockcopolymere dadurch gekennzeichnet sind, dass die Zusammensetzung der C-Blöcke der Zusammensetzung des nicht olefinisch funktionalisierten Anteils in den A-Blöcken entspricht.

Block A besteht aus maximal 4 olefinisch funktionalisierten Monomeren, die aus der Gruppe der olefinisch funktionalisierten (Meth)acrylate besteht. Block B enthält keine zusätzlichen olefinisch funktionalisierten (Meth)acrylate.

Die Schreibweise (Meth)acrylat steht für die Ester der (Meth)acrylsäure und bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

Zudem wurde ein Verfahren zur Herstellung von Blockcopolymeren der Zusammensetzung ABA entwickelt. Mit einer speziellen Form der lebenden Polymerisation, der Atom Transfer Radical Polymerisation (ATRP), können gut kontrollierte Zusammensetzungen, Architekturen und definierte Funktionalitäten in ein Polymeres eingebaut werden.

Es wurde gefunden, dass durch den Einsatz eines bifunktionalen Initiators gezielt eine ABA oder ACBCA Struktur aufgebaut werden kann.

Die zur Funktionalisierung der Außensegmente eingeführten Comonomere zeichnen sich dadurch aus, dass sie zwei ungesättigte, radikalisch polymerisierbare Gruppen enthalten. Ferner zeichnen sie sich dadurch aus, dass diese beiden radikalisch polymerisierbaren Gruppen unterschiedlich sind und über unterschiedliche Polymerisationsaktivitäten verfügen. Bevorzugt sind (Meth)acrylate, die eine zusätzliche olefinische Funktionalität tragen. Besonders bevorzugt werden diese aus der Gruppe der (Meth)acrylsäureester aliphatischer, ungesättigter Alkohole ausgewählt. Diese Alkohole können gradkettig, verzweigt oder cycloaliphatisch sein und von ungesättigten Alkoholen mit 2-36 C-Atomen ausgehend dargestellt worden sein. Ganz besonders bevorzugte Beispiele sind Allylmethacrylat und Allylacrylat.

Vorteilhaft ist, dass die zur Funktionalisierung eingesetzten Monomere polymerisiert werden, ohne dass es zu Vernetzungsreaktionen kommt.

Die Darstellung eines erfindungsgemäßen Blockcopolymers wird somit durch die Copolymerisation von Monomeren der Gestalt, dass eine ungesättigte Gruppe dieser eher (meth)acrylatischer und die zweite eher olefinischer Natur ist, realisiert. Ein Beispiel eines solchen Monomers ist das auch in den Beispielen beschriebene Allylmethacrylat (AMA). Allylmethacrylat wird genauso wie viele Monomere dieser Art nahezu ausschließlich als Vernetzer beschrieben bzw. verwendet. Dies gilt auch für die Polymerisation mittels ATRP. Eine Beschreibung der ATRP gemäßen Substanzpolymerisation von AMA ist beispielsweise in Paris, de la Fuente (J. of Polymer Science: Part A Polymer Chemistry; 43, S. 2395-2406; 2004) nachzulesen. Eine Übersicht über die oft beschriebene freiradikalische Emulsionspolymerisation unter gleichzeitiger Vernetzung mittels Einbau von AMA kann man in Matsumoto et al.; European Polymer J.; 35, S. 1509-1517; 1999 nachlesen.

Einzig Höcker und Keul haben in zwei Arbeiten einen kritischen maximalen Anteil Allylmethacrylats in einer Mischung mit Styrol (Macromolecules; 37, S. 8923-8932; 2004) bzw. Methylmethacrylat (MMA, siehe dazu: Macromol. Chem. and Phys.; 205, S. 2429-2437; 2004) untersucht. Sie beschrieben explizit für den Fall der Copolymerisation mit MMA eine hohe Vernetzungsempfindlichkeit des Systems bei nur relativ geringen AMA-Anteilen z.B. von über 20%. In Moeller et al. (Polymer Preprints; 46, S. 341f; 2005) beschreibt die gleiche Arbeitsgruppe eine entsprechende Anwendung für ATRP-synthestisierte AMA-haltige Methacrylatcopolymere mit einer statistischen Verteilung. Die olefinisch substituierten Polymere werden zur Beschichtung metallischer Oberflächen eingesetzt und anschließend lokal durch Aktivierung z.B. durch Photopolymerisation vernetzt. Nachteil gegenüber den erfindungsgemäßen Polymeren ist eine engmaschige Vernetzung, die für die beschriebenen Beschichtungssysteme zwar durchaus von Vorteil sind, bei der Formulierung in Dichtmassen jedoch zu einer Versprödung des Endproduktes führen können.

Monomere die sowohl in Block A als auch in Block B polymerisiert werden sind ausgewählt aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, i-Butyl(meth)acrylat, t-Butyl(meth)acrylat, Pentyl(meth)acrylat, 2-Ethylhexyl(meth)acrylat, Stearyl(meth)acrylat, Lauryl(meth)acrylat, Cyclohexyl(meth)acrylat, Isobornyl(meth)acrylat; Aryl(meth)acrylate wie zum Beispiel Benzyl(meth)acrylat oder Phenyl(meth)acrylat die jeweils unsubstituiert oder 1-4-fach substituierte Arylreste aufweisen können; andere aromatisch substituierte (Meth)acrylate wie beispielsweise Naphthyl(meth)acrylat; Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxypropylmethacrylat, Cyclohexyloxymethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat und Poly(propylenglycol)methylether(meth)acrylat.

Neben den zuvor dargelegten (Meth)acrylaten können die zu polymerisierenden Zusammensetzungen auch weitere ungesättigte Monomere aufweisen, die mit den zuvor genannten (Meth)acrylaten und mittels ATRP copolymerisierbar sind. Hierzu gehören unter anderem 1-Alkene, wie 1-Hexen, 1-Hepten, verzweigte Alkene wie beispielsweise Vinylcyclohexan, 3,3-Dimethyl-1-propen, 3-Methyl-1-diisobutylen, 4-Methyl-1-penten, Acrylnitril, Vinylester wie z.B. Vinylacetat, Styrol, substituierte Styrole mit einem Alkylsubstituenten an der Vinylgruppe, wie z.B. α-Methylstyrol und α-Ethylstyrol, substituierte Styrole mit einem oder mehreren Alkylsubstituenten am Ring wie Vinyltoluol und p-Methylstyrol, halogenierte Styrole wie beispielsweise Monochlorstyrole, Dichlorstyrole, Tribromstyrole und Tetrabromstyrole; heterocyclische Verbindungen wie 2-Vinylpyridin, 3-Vinylpyridin, 2-Methyl-5-vinylpyridin, 3-Ethyl-4-vinylpyridin, 2,3-Dimethyl-5-Vinylpyridin, Vinylpyrimidin, 9-Vinylcarbazol, 3-Vinylcärbazol, 4-Vinylcarbazol, 2-Methyl-1-vinylimidazol, Vinloxolan, Vinylfuran, Vinylthiophen, Vinylthiolan, Vinylthiazole, Vinyloxazole und Isoprenylether; Maleinsäurederivate, wie beispielsweise Maleinsäureanhydrid, Maleinimid, Methylmaleinimid und Diene wie z.B. Divinylbenzol, sowie in den A-Blöcken die jeweiligen hydroxyfunktionalisierten und/oder aminofunktionalisierten und/oder mercaptofunktionalisierten Verbindungen. Ferner können diese Copolymere auch derart hergestellt werden, dass sie eine Hydroxy- und/oder Amino- und/oder Mercaptofunktionalität in einem Substituenten aufweisen. Solche Monomere sind beispielsweise Vinylpiperidin, 1-Vinylimidazol, N-Vinylpyrrolidon, 2-Vinylpirrolidon, N-Vinylpirrolidin, 3-Vinylpyrrolidin, N-Vinylcaprolactam, N-Vinylbutyrolactam, hydrierte Vinylthiazole und hydrierte Vinyloxazole. Besonders bevorzugt werden Vinylester, Vinylether, Fumarate, Maleate, Styrole oder Acrylonitrile mit den A-Blöcken und/oder B-Blöcken copolymerisiert.

Das Verfahren kann in beliebigen halogenfreien Lösungsmitteln durchgeführt werden. Bevorzugt werden Toluol, Xylol, H₂O; Acetate, vorzugsweise Butylacetat, Ethylacetat, Propylacetat; Ketone, vorzugsweise Ethylmethylketon, Aceton; Ether; Aliphate, vorzugsweise Pentan, Hexan, aber auch Weichmacher wie niedrigmolekulare Polypropylenglycole oder Phthalate.

Die Blockcopolymere der Zusammensetzung ABA werden mittels sequentieller Polymerisation dargestellt.

Neben der Lösungspolymerisation kann die ATRP auch als Emulsions-, Miniemulsions-, Mikroemulsions-, Suspension- oder Substanzpolymerisation durchgeführt werden.

Die Polymerisation kann bei Normaldruck, Unter- oder Überdruck durchgeführt werden. Auch die Polymerisationstemperatur ist unkritisch. Im Allgemeinen liegt sie jedoch im Bereich von -20°C bis 200°C, vorzugsweise von 0°C bis 130°C und besonders bevorzugt von 50°C bis 120°C.

Vorzugsweise weißt das erfindungsgemäße Polymer ein zahlenmittleres Molekulargewicht zwischen 5000 g/mol und 100000 g/mol, besonders bevorzugt ≤ 50000 g/mol und ganz besonders bevorzugt zwischen 7500 g/mol und 25000 g/mol auf.

Es wurde gefunden, dass die Molekulargewichtsverteilung unter 1,6, bevorzugt unter 1,4 und idealerweise unter 1,3 liegt.

Als bifunktionelle Initiatoren können RO₂C-CHX-(CH₂)ₙ-CHX-CO₂R, RO₂C-C(CH₃)X-(CH₂)ₙ-C(CH₃)X-CO₂R, RO₂C-CX₂-(CH₂)ₙ-CX₂-CO₂R, RC(O)-CHX-(CH₂)ₙ-CHX-C(O)R, RC(O)-C(CH₃)X-(CH₂)ₙ-C(CH)₃X-C(O)R, RC(O)-CX₂-(CH₂)ₙ-CX₂-C(O)R, XCH₂-CO₂-(CH₂)ₙ-OC(O)CH₂X, CH₃CHX-CO₂-(CH₂)ₙ-OC(O)CHXCH₃, (CH₃)₂CX-CO₂-(CH₂)ₙ-OC(O)CX(CH₃)₂, X₂CH-CO₂-(CH₂)ₙ-OC(O)CHX₂, CH₃CX₂-CO₂-(CH₂)ₙ-OC(O)CX₂CH₃, XCH₂C(O)C(O)CH₂X, CH₃CHXC(O)C(O)CHXCH₃, XC(CH₃)₂C(O)C(O)CX(CH₃)₂, X₂CHC(O)C(O)CHX₂, CH₃CX₂C(O)C(O)CX₂CH₃, XCH₂-C(O)-CH₂X, CH₃-CHX-C(O)-CHX-CH₃, CX(CH₃)₂-C(O)- CX(CH₃)₂, X₂CH-C(O)-CHX₂, C₆H₅-CHX-(CH₂)ₙ-CHX-C₆H₅, C₆H₅-CX₂-(CH₂)ₙ-CX₂-C₆H₅, C₆H₅-CX₂-(CH₂)ₙ-CX₂-C₆H₅, o,- m- bzw. p-XCH₂-Ph-CH₂X, o,- m- bzw. p-CH₃CHX-Ph-CHXCH₃, o,- m-bzw. p-(CH₃)₂CX-Ph-CX(CH₃)₂, o,- m- bzw. p-CH₃CX₂-Ph-CX₂CH₃, o,- m- bzw. p-X₂CH-Ph-CHX₂, o,- m- bzw. p-XCH₂-CO₂-Ph-OC(O)CH₂X, o,- m- bzw. p-CH₃CHX-CO₂-Ph-OC(O)CHXCH₃, o,- m- bzw. p-(CH₃)₂CX-CO₂-Ph-OC(O)CX(CH₃)₂, CH₃CX₂-CO₂-Ph-OC(O)CX₂CH₃, o,- m- bzw. p-X₂CH-CO₂-Ph-OC(O)CHX₂ oder o,- m- bzw. p-XSO₂-Ph-SO₂X (X steht für Chlor, Brom oder lod; Ph steht für Phenylen (C₆H₄); R repräsentiert einen aliphatischen Rest aus 1 bis 20 Kohlenstoffatomen, der linearer, verzweigter oder auch cyclischer Struktur sein kann, gesättigt oder einfach bzw. mehrfach ungesättigt sein kann und einen bzw. mehrere Aromaten enthalten kann oder aber aromatenfrei ist und n ist eine Zahl zwischen 0 und 20) werden. Vorzugsweise werden 1,4-Butandiol-di-(2-bromo-2-methylpropionat), 1,2-Ethylenglycol-di-(2-bromo-2-methylpropionat), 2,5-Dibrom-adipinsäure-di-ethylester oder 2,3-Dibrom-maleinsäure-di-ethylester verwendet. Aus dem Verhältnis Initiator zu Monomer ergibt sich das spätere Molekulargewicht, falls das gesamte Monomer umgesetzt wird.

Katalysatoren für die ATRP sind in Chem.Rev. 2001, 101, 2921 aufgeführt. Es werden überwiegend Kupferkomplexe beschrieben - unter anderem kommen aber auch Eisen-, Rhodium-, Platin-, Ruthenium- oder Nickelverbindungen zur Anwendung. Allgemein können alle Übergangsmetallverbindungen verwendet werden, die mit dem Initiator, bzw. der Polymerkette, die eine übertragbare Atomgruppe aufweist, einen Redox-Zyklus bilden können. Kupfer kann dazu beispielsweise ausgehend von Cu₂O, CuBr, CuCl, Cul, CuN₃, CuSCN, CuCN, CuNO₂, CuNO₃, CuBF₄, Cu(CH₃COO) oder Cu(CF₃COO) dem System zugeführt werden.

Eine Alternative zu der beschriebenen ATRP stellt eine Variante derselben dar: In der so genannten reversen ATRP können Verbindungen in höheren Oxidationsstufen wie z.B. CuBr₂, CuCl₂, CuO, CrCl₃, Fe₂O₃ oder FeBr₃ eingesetzt werden. In diesen Fällen kann die Reaktion mit Hilfe klassischer Radikalbildner wie beispielsweise AIBN initiiert werden. Hierbei werden die Übergangsmetallverbindungen zunächst reduziert, da sie mit den aus den klassischen Radikalbildnern erzeugten Radikalen umgesetzt werden. Die reverse ATRP wurde u.a. von Wang und Matyjaszewski in Macromolekules (1995), Bd. 28, S. 7572ff beschrieben.

Eine Variante der reversen ATRP stellt der zusätzliche Einsatz von Metallen in der Oxidationsstufe null dar. Durch eine anzunehmende Komproportionierung mit den Übergangsmetattverbindungen der höheren Oxidationsstufe wird eine Beschleunigung der Reaktionsgeschwindigkeit bewirkt. Dieses Verfahren wird in WO 98/40415 näher beschrieben.

Das molare Verhältnis Übergangsmetall zu bifunktionellem Initiator liegt im Allgemeinen im Bereich von 0,02:1 bis 20:1, vorzugsweise im Bereich von 0,02:1 bis 6:1 und besonders bevorzugt im bereich von 0,2:1 bis 4:1, ohne dass hierdurch eine Beschränkung erfolgen soll.

Um die Löslichkeit der Metalle in organischen Lösungsmitteln zu erhöhen und gleichzeitig die Bildung stabiler und dadurch polymerisationsinaktiver Organometallverbindungen zu vermeiden, werden Liganden dem System zugegeben. Zusätzlich erleichtern die Liganden die Abstraktion der übertragbaren Atomgruppe durch die Übergangsmetallverbindung. Eine Auflistung bekannter Liganden findet sich beispielsweise in WO 97/18247, WO 97/47661 oder WO 98/40415. Als koordinativer Bestandteil weisen die als Ligand verwendeten Verbindungen zumeist ein oder mehrere Stickstoff-, Sauerstoff-, Phosphor- und/oder Schwefelatome auf. Besonders bevorzugt sind dabei stickstoffhaltige Verbindungen. Ganz besonders bevorzugt sind stickstoffhaltige Chelatliganden. Als Beispiele seien 2,2'-Bipyridin, N,N,N',N'',N''-Pentamethyldiethylentriamin (PMDETA), Tris(2-aminoethyl)amin (TREN), N,N,N',N'-Tetramethylethylendiamin oder 1,1,4,7,10,10-Hexamethyltriethylentetramin aufgeführt. Wertvolle Hinweise zur Auswahl und Kombination der einzelnen Komponenten findet der Fachmann in WO 98/40415.

Diese Liganden können in situ mit den Metallverbindungen Koordinationsverbindungen bilden oder sie können zunächst als Koordinationsverbindungen hergestellt werden und anschließend in die Reaktionsmischung gegeben werden.

Das Verhältnis Ligand (L) zu Übergangsmetall ist abhängig von der Zähnigkeit des Liganden und der Koordinationszahl des Übergangsmetalls (M). Im Allgemeinen liegt das molare Verhältnis im Bereich 100:1 bis 0,1:1, vorzugsweise 6:1 bis 0,1:1 und besonders bevorzugt 3:1 bis 1:1, ohne dass hierdurch eine Beschränkung erfolgen soll.

Es ergibt sich ein breites Anwendungsfeld für diese Produkte. Die Auswahl der Anwendungsbeispiele ist nicht dazu geeignet die Verwendung der erfindungsgemäßen Polymere einzuschränken. Die Beispiele sollen einzig dazu dienen, stichprobenartig die breite Einsatzmöglichkeit der beschriebenen Polymere darzustellen. Bevorzugt werden Blockcopolymere der Zusammensetzung ABA als Präpolymer für eine weitere Umsetzung der olefinischen Gruppen - wie z.B. eine Hydrosilylierung oder eine Hydroformulierung - eingesetzt. Die Präpolymere können mit beliebigen Polymeren vernetzt werden.

Weitere mögliche Anwendungen, die nicht weiter beschrieben werden, sind unter anderem eine Verwendung als Präpolymer zum Aufbau hochmolekularer Blockstrukturen oder Elastomeren. Die bevorzugten Anwendungen für die erfindungsgemäßen Blockcopolymeren der Zusammensetzung ABA mit ≤4 olefinischen Gruppen in den einzelnen A-Blöcken sind in Reaktivschmelzklebstoffen oder in Klebmassen zu finden. Außerdem bieten sich Verwendungen in Dichtmassen für Anwendungen in den Bereichen Fahrzeug-, Schiffs-, Container-, Maschinen- und Flugzeugbau, sowie in der Elektroindustrie und beim Bau von Haushaltsgeräten an. Ein weiteres Anwendungsgebiet sind Dichtmassen für Bauanwendungen oder Heißsiegelanwendungen.

Ein weiterer Vorteil der Blockcopolymere ist die Farblosigkeit sowie die Geruchlosigkeit des hergestellten Produkts.
Mit den neuen Bindemitteln lassen sich einkomponentige und zweikomponentige Elastomere zum Beispiel für Dichtstoffformutierungen in Bauanwendungen herstellen. Übliche Bestandteile einer Formulierung sind das Bindemittel, Lösungsmittel, Füllstoffe, Pigmente, Weichmacher, Stabilisierungsadditive, Wasserfänger, Haftvermittler, Thixotropiermittel, Vernetzungskatalysatoren, Klebrigmacher (Tackifier), usw.
Zur Reduktion der Viskosität können Lösungsmittel eingesetzt werden, z. B. aromatische Kohlenwasserstoffe (z. B. Toluol, Xylol, usw.), Ester (z. B. Ethylacetat, Butylacetat, Amylacetat, Cellosolveacetat, usw.), Ketone (z. B. Methylethylketon, Methylisobutylketon, Diisobutylketon, usw.), usw. Das Lösungsmittel kann bereits im Verlauf der radikalischen Polymerisation zugegeben werden. Vernetzungskatalysatoren für hydrosilylierte Bindemittel in einer Formulierung zum Beispiel mit entsprechenden Polyurethanen sind die gängigen organischen Zinn-, Blei-, Quecksilber- und Wismutkatalysatoren, z. B. Dibutylzinndilaurat (z. B. von BNT Chemicals GmbH), Dibutylzinndiacetat, Dibutylzinndiketonat (z. B. Metatin 740 von Acima/Rohm + Haas), Dibutylzinndimaleat, Zinnnaphthenat, usw. Es können auch Umsetzungsprodukte von organischen Zinnverbindungen, z. B. Dibutylzinndilaurat mit Kieselsäureestern (z. B. DYNASIL A und 40), als Vernetzungskatalysatoren verwendet werden. Daneben auch Titanate (z. B. Tetrabutyltitanat, Tetrapropyltitanat, usw.), Zirkonate (z. B. Tetrabutylzirkonat, usw.), Amine (z. B. Butylamin, Diethanolamin, Octylamin, Morpholin, 1,3-Diazabicyclo[5.4.6]undezen-7 (DBU), usw.) bzw. deren Carbonsäuresalze, niedermolekulare Polyamide, Aminoorganosilane, Sulfonsäurederivate, und deren Mischungen. Der Anteil des Vernetzungskatalysators in der Formulierung beträgt bevorzugt 0.01 bis 20 Teile bezogen auf 100 Teile Bindemittel, besonders bevorzugt 0.01 bis 10 Teile.

Die Blockcopolymeren der Zusammensetzung ABA mit ≤4 olefinischen Gruppen in den einzelnen A-Blöcken können zur weiteren Umsetzung der olefinischen Gruppen durch eine Additions- oder Oxidationsreaktion direkt oder nach einer Aufreinigung in eine weitere Funktionalität umgesetzt werden, Beispielsweise können Additionsreaktionen zur Verknüpfung großer organischer Reste, Epoxidierungen, Oxidation zu OH-Gruppen oder Hydrosilylierungen durchgeführt werden. Die Reaktionsprodukte, die durch weitere Umsetzungen der olefinischen Gruppen erhalten werden, haben ein breites Anwendungsgebiet. Die bevorzugten Anwendungen sind in Reaktivschmelzklebstoffen oder in Klebmassen zu finden. Außerdem bieten sich Verwendungen in Dichtmassen für Anwendungen in den Bereichen Fahrzeug-, Schiffs-, Container-, Maschinen- und Flugzeugbau, sowie in der Elektroindustrie und beim Bau von Haushaltsgeräten an. Ein weiteres Anwendungsgebiet sind Dichtmasse für Bauanwendungen oder Heißsiegelanwendungen.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

### Beispiel 1

In einem mit Rührer, Thermometer, Rückflusskühler, Stickstoffeinleitungsrohr und Tropftrichter ausgestatteten Doppelmantelgefäß wurden unter N₂-Atmosphäre Monomer 1a (genaue Bezeichnung und Mengenangabe in Tabelle 1), Butylacetat, Kupfer(I)oxid und N,N,N',N'',N"-Pentamethyldiethylentriamin (PMDETA) vorgelegt. Die Lösung wird für 15 min. bei 60 °C gerührt. Anschließend wird bei gleicher Temperatur in Butylacetat gelöster Initiator 1,4-Butandiol-di-(2-bromo-2-methylpropionat) (BDBIB) zugetropft. Nach der Polymerisationszeit von drei Stunden wird eine Probe zur Bestimmung des mittleren Molgewichts Mₙ (mittels SEC) entnommen und eine Mischung aus Monomer 2a und Monomer 3a (genaue Bezeichnung und Mengenangabe in Tabelle 1) zugegeben. Die Mischung wird bis zu einem erwarteten Umsatz von mindestens 98% polymerisiert und durch Exposition mit Luftsauerstoff sowie die optionale Zugabe von Methylenchlorid abgebrochen. Die Lösung wird durch Filtration über Kieselgel und die anschließende Entfernung volatiler Bestandteile mittels Destillation aufgearbeitet. Das mittlere Molekulargewicht wird abschließend durch SEC-Messungen bestimmt. Der Anteil an eingebautem Monomer 3a wird durch ¹H-NMR-Messungen quantifiziert.

### Beispiel 2

Analog dem Beispiel 1 werden die Monomere 1b, 2b und 3b (genaue Bezeichnung und Mengenangabe in Tabelle 1) eingesetzt.

### Beispiel 3

Analog dem Beispiel 1 werden die Monomere 1c, 2c und 3c (genaue Bezeichnung und Mengenangabe in Tabelle 1) eingesetzt.

### Beispiel 4

Analog dem Beispiel 1 werden die Monomere 1 d, 2d und 3d (genaue Bezeichnung und Mengenangabe in Tabelle 1) eingesetzt.

**Tabelle 1**

| Beispiel | 1 | 2 | 3 | 4 |
|---|---|---|---|---|
| Monomer 1 | 1a) MMA | 1b) n-BA | 1c) n-BA | 1d) MMA |
| Menge | 81,07 g | 85,09 g | 81,99 g | 78,06 g |
| Monomer 2 | 2a) MMA | 2b) MMA | 2c) n-BA | 2d) n-BA |
| Menge | 14,45 g | 11,44 g | 14,67 g | 17,87g |
| Monomer 3 | 3a) AMA | 3b) AMA | 3c) AMA | 3d) AMA |
| Menge | 4,48 g | 3,47 g | 3,35 g | 4,08g |
| Initiatormenge | 2,95.g | 2,42 g | 2,33 g | 1,84 g |
| Mₙ(1.Sufe) | 8500 | 12800 | 11900 | 7400 |
| Mₙ (Endprodukt) | 9000 | 14500 | 13500 | 8600 |
| D | 1,32 | 1,29 | 1,32 | 1,25 |

| | | | | |
|---|---|---|---|---|
| MMA= Methylmethacrylat; n-BA= n-Butylacrylat, AMA= Allylmethacrylat | | | | |

### Beispiel 5

In einem mit Rührer, Thermometer, Rückflusskühler, Stickstoffeinleitungsrohr und Tropftrichter ausgestatteten Doppelmantelgefäß wurden unter N₂-Atmosphäre Monomer Ia (genaue Bezeichnung und Mengenangabe in Tabelle 2), Butylacetat, Kupfer(I)oxid und PMDETA vorgelegt. Die Lösung wird für 15 min. bei 60 °C gerührt. Anschließend wird bei gleicher Temperatur in Butylacetat gelöster Initiator 1,4-Butandiol-di-(2-bromo-2-methylpropionat). (BDBIB) zugetropft. Nach der Polymerisationszeit von 3 Stunden wird eine Probe zur Bestimmung des mittleren Molgewichts Mₙ (mittels SEC) entnommen und Monomer IIa (genaue Bezeichnung und Mengenangabe in Tabelle 2) beigefügt. Nach einem errechneten 98%igen Umsatz wird schließlich eine Mischung aus Monomer IIa' und Monomer IIIa (genaue Bezeichnung und Mengenangabe in Tabelle 2) zugegeben. Die Mischung wird bis zu einem erwarteten Umsatz von mindestens 98% polymerisiert und durch Exposition mit Luftsauerstoff sowie die optionale Zugabe von Methylenchlorid abgebrochen. Die Lösung wird durch Filtration über Kieselgel und die anschließende Entfernung volatiler Bestandteile mittels Destillation aufgearbeitet. Das mittlere Molekulargewicht wird abschließend durch SEC-Messungen bestimmt. Der Anteil an eingebautem Monomer IIIa wird durch ¹H-NMR-Messungen quantifiziert

**Tabelle 2**

| Beispiel | 5 |
|---|---|
| Monomer I | Ia) n-BA |
| Menge | 61,05 g |
| Monomer II | IIa) MMA |
| Menge | 16,89 g |
| Monomer II' | IIa') MMA |
| Menge | 16,89 g |
| Monomer III | IIIa) AMA |
| Menge | 4,98 g |
| Initiatormenge | 3,47 g |
| Mₙ(1.Sufe) | 8800 |
| Mₙ (Endprodukt) | 11200 |
| D | 1,36 |

| | |
|---|---|
| MMA= Methylmethacrylat; n-BA= n-Butylacrylat, AMA= Allylmethacrylat | |

### Beispiel 6 (Vergleichsbeispiel 1)

### Synthese unfunktionalisierter ABA-Triblockcopolymere

Allgemeine Vorschrift zur Synthese der beschriebenen ABA-Triblockcopolymere mittels ATRP:
In einem mit Rührer, Thermometer, Rückflusskühler, Stickstoffeinleitungsrohr und Tropftrichter ausgestatteten Doppelmantelgefäß wurden unter N₂-Atmosphäre Monomer V1a (genaue Bezeichnung und Mengenangabe in Tabelle 3), Butylacetat, Kupfer(I)oxid und PMDETA vorgelegt. Die Lösung wird für 15 min. bei 60 °C gerührt. Anschließend wird bei gleicher Temperatur in Butylacetat gelöster Initiator 1,4-Butandiol-di-(2-bromo-2-methylpropionat) (BDBIB) zugetropft. Nach der Polymerisationszeit t₁ von 3 Stunden wird eine Probe zur Bestimmung des mittleren Molgewichts Mₙ (mittels SEC) entnommen und Monomer V2a (genaue Bezeichnung und Mengenangabe in Tabelle 3) zugegeben. Die Mischung wird bis zu einem erwarteten Umsatz von mindestens 98% polymerisiert und durch Exposition mit Luftsauerstoff sowie die optionale Zugabe von Methylenchlorid abgebrochen. Die Lösung wird durch Filtration über Kieselgel und die anschließende Entfernung volatiler Bestandteile mittels Destillation aufgearbeitet. Das mittlere Molekulargewicht wird abschließend durch SEC-Messungen bestimmt.

### Beispiel 7 (Vergleichsbeispiel 2)

Analog dem Beispiel 6 werden die Monomere V1b und V2b (genaue Bezeichnung und Mengenangabe in Tabelle 3) eingesetzt.

### Beispiel 8 (Vergleichsbeispiel 3)

Analog dem Beispiel 6 werden die Monomere V1 c und V2c (genaue Bezeichnung und Mengenangabe in Tabelle 3) eingesetzt.

### Beispiel 9 (Vergleichsbeispiel 4)

Analog dem Beispiel 6 werden die Monomere V1d und V2d (genaue Bezeichnung und Mengenangabe in Tabelle 3) eingesetzt.

**Tabelle 3**

| Beispiel | 6 | 7 | 8 | 9 |
|---|---|---|---|---|
| Monomer V1 | V1a) MMA | V1b) MMA | V1c) n-BA | V1d) n-BA |
| Menge | 84,88 g | 88,15 g | 84,47 g | 74,45 g |
| Monomer V2 | V2a) MMA | V2b) MMA | V2c) n-BA | V2d) n-BA |
| Menge | 15,12 g | 11,85 g | 15,13 g | 25,55 g |
| Initiatormenge | 3,09 g | 2,51 g | 2,41 g | 2,72 g |
| Mₙ (1.Sufe) | 7600 | 12300 | 12900 | 9200 |
| Mₙ (Endprodukt) | 8100 | 14500 | 13800 | 8400 |
| D | 1,25 | 1,29 | 1,26 | 1,23 |

| | | | | |
|---|---|---|---|---|
| MMA= Methylmethacrylat; n-BA= n-Butylacrylat, AMA= Allylmethacrylat | | | | |

## Patentansprüche

1. Blockcopolymere der Zusammensetzung ABA mit ≤4 olefinischen Gruppen in den einzelnen A-Blöcken, **dadurch gekennzeichnet,**
**dass** Block A, ein Copolymer enthaltend olefinisch funktionalisierte (Meth)acrylate und Monomere ausgewählt aus der Gruppe der (Meth)acrylate oder deren Mischungen und ein
Block B, enthaltend (Meth)acrylate oder deren Mischungen, die keine zusätzliche olefinische Funktion aufweisen,
als ABA-Blockcopolymerisate polymerisiert werden.

2. Blockcopolymere gemäß Anspruch 1, **dadurch gekennzeichnet, dass** die Blockcopolymere mittels ATRP polymerisierbare Monomere, die nicht zu der Gruppe der (Meth)acrylate gezählt werden, in Block A und/oder Block B enthalten.

3. Blockcopolymere gemäß Anspruch 1, **dadurch gekennzeichnet, dass** die Blockcopolymere mittels ATRP polymerisierbare Monomere, die nicht zu der Gruppe der (Meth)acrylate gezählt werden, in Mengen von 0-50 Gew.-% in den Blöcken A und/oder B enthalten.

4. Blockcopolymere gemäß Anspruch 1, **dadurch gekennzeichnet, dass** die einzelnen A-Blöcke der ABA-Blockcopolymere eine Zusammensetzung mit ≤2 olefinischen Gruppen aufweisen.

5. Blockcopolymere gemäß Anspruch 1, **dadurch gekennzeichnet, dass** die einzelnen A-Blöcke weniger als 20% des Gesamtgewichts des ABA-Blockcopolymers ausmachen.

6. Blockcopolymere gemäß Anspruch 5, **dadurch gekennzeichnet, dass** die einzelnen A-Blöcke weniger als 10% des Gesamtgewichts des ABA-Blockcopolymers ausmachen.

7. Blockcopolymere gemäß Anspruch 6, **dadurch gekennzeichnet, dass** die einzelnen A-Blöcke weniger als 5% des Gesamtgewichts des ABA-Blockcopolymers ausmachen.

8. Blockcopolymere gemäß Anspruch 1, **dadurch gekennzeichnet, dass** die einzelnen A-Blöcke wiederum in sich eine AC-Diblockstruktur aufweisen können und somit zu ACBCA-Pentablockcopolymeren führen.

9. Blockcopolymere gemäß Anspruch 8, **dadurch gekennzeichnet, dass** die Zusammensetzung der C-Blöcke der Zusammensetzung des nicht olefinisch funktionalisierten Anteils in den A-Blöcken entspricht.

10. Blockcopolymere gemäß Anspruch 1, **dadurch gekennzeichnet, dass** die zur Funktionalisierung der A-Segmente eingesetzten Monomere zwei ungesättigte, radikalisch polymerisierbare Gruppen enthalten.

11. Blockcopolymere gemäß Anspruch 10, **dadurch gekennzeichnet, dass** die beiden radikalisch polymerisierbaren Gruppen der zur Funktionalisierung verwendeten Monomere unterschiedlich sind und über unterschiedliche Polymerisationsaktivitäten verfügen.

12. Blockcopolymere gemäß Anspruch 11, **dadurch gekennzeichnet, dass** zur Funktionalisierung verwendeten Monomere bevorzugt aus der Gruppe der (Meth)acrylate, die eine zusätzliche olefinische Funktionalität tragen, ausgewählt werden.

13. Blockcopolymere gemäß Anspruch 12, **dadurch gekennzeichnet, dass** zur Funktionalisierung verwendeten Monomere bevorzugt Allylmethacrylat oder Allylacrylat sind.

14. Blockcopolymere gemäß Anspruch 1, **dadurch gekennzeichnet, dass** das Polymer schwefelfrei ist.

15. Blockcopolymere gemäß Anspruch 1, **dadurch gekennzeichnet, dass** die (Meth)acrylate bevorzugt ausgewählt sind aus der Gruppe der Alkyl(meth)acrylate von gradkettigen, verzweigten oder cycloaliphatischen Alkoholen mit 1-40 C-Atomen, wie zum Beispiel Methyl(meth)acrylat, Ethyl(meth)acrylat, n-Butyl(meth)acrylat, i-Butyl(meth)acrylat, t-Butyl(meth)acrylat, 2-Ethylhexyl(meth)acrylat, Stearyl(meth)acrylat, Lauryl(meth)acrylat, Cyclohexyl(meth)acrylat, Isobornyl(meth)acrylat, Aryl(meth)acrylate wie zum Beispiel Benzyl(meth)acrylat oder Phenyl(meth)acrylat die jeweils unsubstituiert oder 1-4-fach substituierte Arylreste aufweisen können, Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxypropylmethacrylat, Cyclohexyloxymethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat oder Poly(propylenglycol)methylether(meth)acrylat.

16. Blockcopolymere gemäß Anspruch 2, **dadurch gekennzeichnet, dass** die Blöcke A und/oder B Vinylester, Vinylether, Fumarate, Maleate, Styrole, Acrylonitrile oder andere mittels ATRP polymerisierbare Monomere enthalten können.

17. Verfahren zur Herstellung von Blockcopolymeren der Zusammensetzung ABA mit ≤4 olefinischen Gruppen in den einzelnen A-Blöcken, **dadurch gekennzeichnet, dass** Block A, ein Copolymer enthaltend olefinisch funktionalisierte (Meth)acrylate und Monomere ausgewählt aus der Gruppe der (Meth)acrylate oder deren Mischungen und ein
Block B, enthaltend (Meth)acrylate oder deren Mischungen, die keine zusätzliche olefinische Funktionalität aufweisen, mittels Atom Transfer Radical Polymerization (ATRP) in Anwesenheit eines Initiators und eines Katalysators in einem halogenfreien Lösungsmittel dargestellt werden.

18. Verfahren zur Herstellung von Blockcopolymeren gemäß. Anspruch 17, **dadurch gekennzeichnet, dass** es sich bei dem Initiator um einen bifunktionellen Initiator handelt.

19. Verfahren zur Herstellung von Blockcopolymeren gemäß Anspruch 18, **dadurch gekennzeichnet, dass** als bifunktioneller Initiator bevorzugt 1,4-Butandiol-di-(2-bromo-2-methylpropionat), 1,2-Ethylenglycol-di-(2-bromo-2-methylpropionat), 2,5-Dibrom-adipinsäure-di-ethylester oder 2,3-Dibrom-maleinsäure-di-ethylester eingesetzt wird.

20. Verfahren zur Herstellung von Blockcopolymeren gemäß Anspruch 17, **dadurch gekennzeichnet, dass** das Blockcopolymer der Zusammensetzung ABA mittels sequentieller Polymerisation dargestellt wird.

21. Verfahren zur Herstellung von Blockcopolymeren gemäß Anspruch 17, **dadurch gekennzeichnet, dass** als Katalysator Übergangsmetallverbindungen verwendet werden.

22. Verfahren zur Herstellung von Blockcopolymeren gemäß Anspruch 21,
**dadurch gekennzeichnet, dass** als Katalysator Kupfer-, Eisen-, Rhodium-, Platin-, Ruthenium- oder Nickelverbindungen verwendet werden.

23. Verfahren zur Herstellung von Blockcopolymeren gemäß Anspruch 22, **dadurch gekennzeichnet, dass** als Katalysator Kupferverbindungen verwendet werden.

24. Verfahren zur Herstellung von Blockcopolymeren gemäß Anspruch 17, **dadurch gekennzeichnet, dass** der Katalysator vor der Polymerisation mit einer stickstoff-, sauerstoff-, schwefel- oder phosphorhaltigen Verbindung, die eine oder mehrere koordinative Bindungen mit dem Übergangsmetall zu einem Metall-Ligand-Komplex eingehen kann, zusammengebracht wird.

25. Verfahren zur Herstellung von Blockcopolymeren gemäß Anspruch 24, **dadurch gekennzeichnet, dass** als Ligand N-haltige Chelatliganden verwendet werden.

26. Verfahren zur Herstellung von Blockcopolymeren gemäß Anspruch 25, **dadurch gekennzeichnet, dass** als Ligand 2,2'-Bipyridin, N,N,N',N",N"-Pentamethyldiethylentriamin (PMDETA), Tris(2-aminoethyl)amin (TREN), N,N,N',N'-Tetramethylethylendiamin oder 1,1,4,7,10,10-Hexamethyltriethylentetramin verwendet wird.

27. Verfahren zur Herstellung von Blockcopolymeren gemäß Anspruch 17, **dadurch gekennzeichnet, dass** die zur Funktionalisierung eingesetzten Monomere polymerisiert werden, ohne dass es zu Vernetzungsreaktionen kommt.

28. Verfahren zur Herstellung von Blockcopolymeren gemäß Anspruch 17,
**dadurch gekennzeichnet, dass** das Blockcopolymer ein zahlenmittleres Molekulargewicht zwischen 5000 g/mol und 100000 g/mol aufweist.

29. Verfahren zur Herstellung von Blockcopolymeren gemäß Anspruch 17, **dadurch gekennzeichnet, dass** das Blockcopolymer bevorzugt ein zahlenmittleres Molekulargewicht zwischen 7500 g/mol und 25000 g/mol aufweist.

30. Verfahren zur Herstellung von Blockcopolymeren gemäß Anspruch 17, **dadurch gekennzeichnet, dass** das Blockcopolymer eine Molekulargewichtsverteilung kleiner 1,6 aufweist.

31. Verfahren zur Herstellung von Blockcopolymeren gemäß Anspruch 17, **dadurch gekennzeichnet, dass** das Blockcopolymer bevorzugt eine Molekulargewichtsverteilung kleiner 1,4 aufweist.

32. Verwendung von Blockcopolymeren der Zusammensetzung ABA mit ≤4 olefinischen Gruppen in den einzelnen A-Blöcken, **dadurch gekennzeichnet, dass** Block A, ein Copolymer enthaltend olefinisch funktionalisierte (Meth)acrylate und Monomere ausgewählt aus der Gruppe der (Meth)acrylate oder deren Mischungen und ein
Block B, enthaltend (Meth)acrylate oder deren Mischungen, die keine olefinischen Funktion aufweisen,
als ABA-Blockcopolymerisate polymerisiert werden,
in Reaktivschmelzklebstoffen oder in Klebmassen.

33. Verwendung von Blockcopolymeren der Zusammensetzung ABA mit ≤4 olefinischen Gruppen in den einzelnen A-Blöcken, **dadurch gekennzeichnet, dass** Block A, ein Copolymer enthaltend olefinisch funktionalisierte (Meth)acrylate und Monomere ausgewählt aus der Gruppe der (Meth)acrylate oder deren Mischungen und ein
Block B, enthaltend (Meth)acrylate oder deren Mischungen, die keine olefinische Funktion aufweisen,
als ABA-Blockcopolymerisate polymerisiert werden,
in Dichtmassen für Anwendungen in den Bereichen Fahrzeug-, Schiffs-, Container-, Maschinen- und Flugzeugbau, sowie in der Elektroindustrie und beim Bau von Haushaltsgeräten.

34. Verwendung von Blockcopolymeren der Zusammensetzung ABA mit ≤4 olefinischen Gruppen in den einzelnen A-Blöcken, **dadurch gekennzeichnet, dass** Block A, ein Copolymer enthaltend olefinisch funktionalisierte (Meth)acrylate und Monomere ausgewählt aus der Gruppe der (Meth)acrylate oder deren Mischungen und ein
Block B, enthaltend (Meth)acrylate oder deren Mischungen, die keine olefinische Funktion aufweisen,
als ABA-Blockcopolymerisate polymerisiert werden,
in Dichtmassen für Bauanwendungen.

35. Verwendung von Blockcopolymeren der Zusammensetzung ABA mit ≤4 olefinischen Gruppen in den einzelnen A-Blöcken, **dadurch gekennzeichnet, dass** Block A, ein Copolymer enthaltend olefinisch funktionalisierte (Meth)acrylate und Monomere ausgewählt aus der Gruppe der (Meth)acrylate oder deren Mischungen und ein
Block B, enthaltend (Meth)acrylate oder deren Mischungen, die keine olefinische Funktion aufweisen,
als ABA-Blockcopolymerisate polymerisiert werden,
in Heißsiegelanwendungen.

36. Verwendung von Blockcopolymeren der Zusammensetzung ABA mit ≤4 olefinischen Gruppen in den einzelnen A-Blöcken, **dadurch gekennzeichnet, dass** Block A, ein Copolymer enthaltend olefinisch funktionalisierte (Meth)acrylate und Monomere ausgewählt aus der Gruppe der (Meth)acrylate oder deren Mischungen und ein
Block B, enthaltend (Meth)acrylate oder deren Mischungen, die keine olefinische Funktion aufweisen,
als ABA-Blockcopolymerisate polymerisiert werden,
zur weiteren Umsetzung der olefinischen Gruppen.

37. Verwendung von Blockcopolymeren der Zusammensetzung ABA mit ≤4 olefinischen Gruppen in den einzelnen A-Blöcken gemäß Anspruch 36, **dadurch gekennzeichnet, dass** in direktem Anschluss an die Polymerisation oder nach einer Aufreinigung des olefinisch funktionalisierten Blockcopolymers die olefinischen Funktionalitäten in den A-Blöcken durch eine Additions- oder Oxidationsreaktion in eine weitere Funktionalität umgesetzt werden.

38. Verwendung von Blockcopolymeren der Zusammensetzung ABA mit ≤4 olefinischen Gruppen in den einzelnen A-Blöcken gemäß Anspruch 37, **dadurch gekennzeichnet, dass** die Folgereaktion eine Oxidation zu OH-Gruppen ist.

39. Verwendung von Blockcopolymeren der Zusammensetzung ABA mit ≤4 olefinischen Gruppen in den einzelnen A-Blöcken gemäß Anspruch 37, **dadurch gekennzeichnet, dass** die Folgereaktion eine Epoxidierung ist.

40. Verwendung von Blockcopolymeren der Zusammensetzung ABA mit ≤4 olefinischen Gruppen in den einzelnen A-Blöcken gemäß Anspruch 37, **dadurch gekennzeichnet, dass** die Folgereaktion eine Additionsreaktion zur Verknüpfung großer organischer Reste ist.

41. Verwendung von Blockcopolymeren der Zusammensetzung ABA mit ≤4 olefinischen Gruppen in den einzelnen A-Blöcken gemäß Anspruch 37, **dadurch gekennzeichnet, dass** die Folgereaktion eine Hydrosilylierung ist.

42. Verwendung von Blockcopolymeren der Zusammensetzung ABA mit ≤4 olefinischen Gruppen in den einzelnen A-Blöcken gemäß Anspruch 41,
**dadurch gekennzeichnet, dass** die Folgereaktion eine Hydrosilylierung mit Verbindungen der Formel
HSi(OR¹)_{b}R²ₐX_{c}
ist, wobei die organischen Resten R¹ bzw. R² jeweils identisch oder verschieden zueinander sind und ausgewählt aus der Gruppe der aliphatischen Kohlenwasserstoffreste bestehend aus 1 bis 20 Kohlenstoffatomen die linear, verzweigt oder cyclisch sind, R¹ kann dabei auch ausschließlich Wasserstoff sein,
X ausgewählt aus der Gruppe der hydrolisierbaren Reste, die ungleich Alkoxy bzw. Hydroxy sind,
a, b und c jeweils ganze Zahlen zwischen 0 und 3 sind und die Summe von a, b und c 3 ergibt.

43. Verwendung von Blockcopolymeren der Zusammensetzung ABA mit ≤4 olefinischen Gruppen in den einzelnen A-Blöcken, **dadurch gekennzeichnet, dass** gemäß Anspruch 36 in direktem Anschluss an die Polymerisation oder nach einer Aufreinigung des olefinisch funktionalisierten Blockcopolymers die olefinischen Funktionalitäten in den A-Blöcken durch eine Additions- oder Oxidationsreaktion in eine weitere Funktionalität umgesetzt werden,
in Reaktivschmelzklebstoffen oder in Klebmassen.

44. Verwendung von Blockcopolymeren der Zusammensetzung ABA mit ≤4 olefinischen Gruppen in den einzelnen A-Blöcken, **dadurch gekennzeichnet, dass** gemäß Anspruch 36 in direktem Anschluss an die Polymerisation oder nach einer Aufreinigung des olefinisch funktionalisierten Blockcopolymers die olefinischen Funktionalitäten in den A-Blöcken durch eine Additions- oder Oxidationsreaktion in eine weitere Funktionalität umgesetzt werden,
in Dichtmassen für Anwendungen in den Bereichen Fahrzeug-, Schiffs-, Container-, Maschinen- und Flugzeugbau, sowie in der Elektroindustrie und beim Bau von Haushaltsgeräten.

45. Verwendung von Blockcopolymeren der Zusammensetzung ABA mit ≤4 olefinischen Gruppen in den einzelnen A-Blöcken, **dadurch gekennzeichnet, dass** gemäß Anspruch 36 in direktem Anschluss an die Polymerisation oder nach einer Aufreinigung des olefinisch funktionalisierten Blockcopolymers die olefinischen Funktionalitäten in den A-Blöcken durch eine Additions- oder Oxidationsreaktion in eine weitere Funktionalität umgesetzt werden,
in Dichtmassen für Bauanwendungen.

46. Verwendung von Blockcopolymeren der Zusammensetzung ABA mit ≤4 olefinischen Gruppen in den einzelnen A-Blöcken, **dadurch gekennzeichnet, dass** gemäß Anspruch 36 in direktem Anschluss an die Polymerisation oder nach einer Aufreinigung des olefinisch funktionalisierten Blockcopolymers die olefinischen Funktionalitäten in den A-Blöcken durch eine Additions- oder Oxidationsreaktion in eine weitere Funktionalität umgesetzt werden,
in Heißsiegelanwendungen.

## Claims

1. Block copolymers of composition ABA with ≤4 olefinic groups in the individual A blocks,
**characterized in that**
block A, a copolymer containing olefinically functionalized (meth)acrylates and monomers selected from the group of (meth)acrylates or mixtures thereof and one
block B, containing (meth)acrylates or mixtures thereof which have no additional olefinic function,
are polymerized as ABA block copolymers.

2. Block copolymers according to Claim 1,
**characterized in that** the block copolymers contain ATRP-polymerizable monomers which are not included in the group of (meth)acrylates in block A and/or block B.

3. Block copolymers according to Claim 1,
**characterized in that** the block copolymers contain ATRP-polymerizable monomers which are not included in the group of (meth)acrylates in amounts of 0-50% by weight in blocks A and/or B.

4. Block copolymers according to Claim 1,
**characterized in that** the individual A blocks of the ABA block copolymers have a composition with ≤2 olefinic groups.

5. Block copolymers according to Claim 1,
**characterized in that** the individual A blocks make up less than 20% of the total weight of the ABA block copolymer.

6. Block copolymers according to Claim 5,
**characterized in that** the individual A blocks make up less than 10% of the total weight of the ABA block copolymer.

7. Block copolymers according to Claim 6,
**characterized in that** the individual A blocks make up less than 5% of the total weight of the ABA block copolymer.

8. Block copolymers according to Claim 1,
**characterized in that** the individual A blocks may in turn inherently have an AC diblock structure and so lead to ACBCA pentablock copolymers.

9. Block copolymers according to Claim 8,
**characterized in that** the composition of the C blocks corresponds to the composition of the non-olefinically functionalized fraction in the A blocks.

10. Block copolymers according to Claim 1,
**characterized in that** the monomers used for functionalization of the A segments contain two unsaturated, free-radically polymerizable groups.

11. Block copolymers according to Claim 10,
**characterized in that** the two free-radically polymerizable groups of the monomers used for the functionalization are different and possess different polymerization activities.

12. Block copolymers according to Claim 11,
**characterized in that** monomers used for the functionalization are selected preferably from the group of the (meth)acrylates which carry an additional olefinic functionality.

13. Block copolymers according to Claim 12,
**characterized in that** monomers used for the functionalization are preferably allyl methacrylate or allyl acrylate.

14. Block copolymers according to Claim 1,
**characterized in that** the polymer is sulphur-free.

15. Block copolymers according to Claim 1,
**characterized in that** the (meth)acrylates are preferably selected from the group of alkyl (meth)acrylates of straight-chain, branched or cycloaliphatic alcohols having 1-40 carbon atoms, such as, for example, methyl (meth)acrylate, ethyl (meth)acrylate, n-butyl (meth)acrylate, isobutyl (meth)acrylate, tert-butyl (meth)acrylate, 2-ethylhexyl (meth)acrylate, stearyl (meth)acrylate, lauryl (meth)acrylate, cyclohexyl (meth)acrylate, isobornyl (meth)acrylate, aryl (meth)acrylates such as, for example, benzyl (meth)acrylate or phenyl (meth)acrylate which may in each case have unsubstituted or mono- to tetra-substituted aryl radicals, mono(meth)acrylates of ethers, polyethylene glycols, polypropylene glycols or mixtures thereof having 5-80 carbon atoms, such as, for example, tetrahydrofurfuryl methacrylate, methoxy(m)ethoxyethyl methacrylate, 1-butoxypropyl methacrylate, cyclohexyloxymethyl methacrylate, benzyloxymethyl methacrylate, furfuryl methacrylate, 2-butoxyethyl methacrylate, 2-ethoxyethyl methacrylate, allyloxymethyl methacrylate, 1-ethoxybutyl methacrylate, 1-ethoxyethyl methacrylate, ethoxymethyl methacrylate, poly(ethylene glycol) methyl ether (meth)acrylate or poly-(propylene glycol) methyl ether (meth)acrylate.

16. Block copolymers according to Claim 2,
**characterized in that** the blocks A and/or B may contain vinyl esters, vinyl ethers, fumarates, maleates, styrenes, acrylonitriles or other ATRP-polymerizable monomers.

17. Process for preparing block copolymers of composition ABA with ≤4 olefinic groups in the individual A blocks, **characterized in that** block A, a copolymer containing olefinically functionalized (meth)acrylates and monomers selected from the group of (meth)acrylates or mixtures thereof, and one block B, containing (meth)acrylates or mixtures thereof which have no additional olefinic functionality, are prepared by means of atom transfer radical polymerization (ATRP) in the presence of an initiator and of a catalyst in a halogen-free solvent.

18. Process for preparing block copolymers according to Claim 17, **characterized in that** the initiator is a bifunctional initiator.

19. Process for preparing block copolymers according to Claim 18, **characterized in that** 1,4-butanediol di(2-bromo-2-methylpropionate), 1,2-ethylene glycol di(2-bromo-2-methylpropionate), diethyl 2,5-dibromoadipate or diethyl 2,3-dibromomaleate is used preferably as bifunctional initiator.

20. Process for preparing block copolymers according to Claim 17, **characterized in that** the block copolymer of composition ABA is prepared by means of sequential polymerization.

21. Process for preparing block copolymers according to Claim 17, **characterized in that** transition metal compounds are used as catalyst.

22. Process for preparing block copolymers according to Claim 21, **characterized in that** compounds of copper, of iron, of rhodium, of platinum, of ruthenium or of nickel are used as catalyst.

23. Process for preparing block copolymers according to Claim 22, **characterized in that** copper compounds are used as catalyst.

24. Process for preparing block copolymers according to Claim 17, **characterized in that** prior to the polymerization the catalyst is brought together with a nitrogen, oxygen, sulphur or phosphorus compound which is able to form one or more coordinative bonds with the transition metal to form a metal-ligand complex.

25. Process for preparing block copolymers according to Claim 24, **characterized in that** N-containing chelate ligands are used as ligand.

26. Process for preparing block copolymers according to Claim 25, **characterized in that** 2,2'-bipyridine, N,N,N',N",N"-pentamethyldiethylenetriamine (PMDETA), tris(2-aminoethyl)amine (TREN), N,N,N',N'-tetramethylethylenediamine or 1,1,4,7,10,10-hexamethyltriethylenetetramine is used as ligand.

27. Process for preparing block copolymers according to Claim 17, **characterized in that** the monomers employed for the functionalization are polymerized without the occurrence of crosslinking reactions.

28. Process for preparing block copolymers according to Claim 17, **characterized in that** the block copolymer has a number-average molecular weight of between 5000 g/mol and 100 000 g/mol.

29. Process for preparing block copolymers according to Claim 17, **characterized in that** the block copolymer preferably has a number-average molecular weight of between 7500 g/mol and 25 000 g/mol.

30. Process for preparing block copolymers according to Claim 17, **characterized in that** the block copolymer has a molecular weight distribution of less than 1.6.

31. Process for preparing block copolymers according to Claim 17, **characterized in that** the block copolymer preferably has a molecular weight distribution of less than 1.4.

32. Use of block copolymers of composition ABA with ≤4 olefinic groups in the individual A blocks,
**characterized in that**
block A, a copolymer containing olefinically functionalized (meth)acrylates and monomers selected from the group of (meth)acrylates or mixtures thereof, and one
block B, containing (meth)acrylates or mixtures thereof which have no olefinic function, are polymerized as ABA block copolymers,
in reactive hot-melt adhesives or adhesive bonding compositions.

33. Use of block copolymers of composition ABA with ≤4 olefinic groups in the individual A blocks,
**characterized in that**
block A, a copolymer containing olefinically functionalized (meth)acrylates and monomers selected from the group of (meth)acrylates or mixtures thereof, and one
block B, containing (meth)acrylates or mixtures thereof which have no olefinic function, are polymerized as ABA block copolymers,
in sealants for applications in the fields of automotive engineering, shipbuilding, container construction, mechanical engineering and aircraft engineering, and also in the electrical industry and in the building of domestic appliances.

34. Use of block copolymers of composition ABA with ≤4 olefinic groups in the individual A blocks,
**characterized in that**
block A, a copolymer containing olefinically functionalized (meth)acrylates and monomers selected from the group of (meth)acrylates or mixtures thereof, and one block B, containing (meth)acrylates or mixtures thereof which have no olefinic function, are polymerized as ABA block copolymers, in sealants for building applications.

35. Use of block copolymers of composition ABA with ≤4 olefinic groups in the individual A blocks,
**characterized in that**
block A, a copolymer containing olefinically functionalized (meth)acrylates and monomers selected from the group of (meth)acrylates or mixtures thereof, and one block B, containing (meth)acrylates or mixtures thereof which have no olefinic function,
are polymerized as ABA block copolymers, in heat-sealing applications.

36. Use of block copolymers of composition ABA with ≤4 olefinic groups in the individual A blocks,
**characterized in that**
block A, a copolymer containing olefinically functionalized (meth)acrylates and monomers selected from the group of (meth)acrylates or mixtures thereof, and one
block B, containing (meth)acrylates or mixtures thereof which have no olefinic function,
are polymerized as ABA block copolymers, for further reaction of the olefinic groups.

37. Use of block copolymers of composition ABA with ≤4 olefinic groups in the individual A blocks, according to Claim 36, **characterized in that** immediately after the polymerization or after purification of the olefinically functionalized block copolymer the olefinic functionalities in the A blocks are converted into a further functionality by means of an addition reaction or oxidation reaction.

38. Use of block copolymers of composition ABA with ≤4 olefinic groups in the individual A blocks, according to Claim 37, **characterized in that** the subsequent reaction is an oxidation to OH groups.

39. Use of block copolymers of composition ABA with ≤4 olefinic groups in the individual A blocks, according to Claim 37, **characterized in that** the subsequent reaction is an epoxidation.

40. Use of block copolymers of composition ABA with ≤4 olefinic groups in the individual A blocks, according to Claim 37, **characterized in that** the subsequent reaction is an addition reaction for linking large organic radicals.

41. Use of block copolymers of composition ABA with ≤4 olefinic groups in the individual A blocks, according to Claim 37, **characterized in that** the subsequent reaction is a hydrosilylation.

42. Use of block copolymers of composition ABA with ≤4 olefinic groups in the individual A blocks, according to Claim 41, **characterized in that** the subsequent reaction is a hydrosilylation with compounds of the formula
HSi(OR¹)_{b}R²ₐX_{c}
wherein the organic radicals R¹ and R² are each identical or different to one another and are selected from the group of aliphatic hydrocarbon radicals consisting of 1 to 20 carbon atoms, which are linear, branched or cyclic, it also being possible for R¹ here to be exclusively hydrogen, X is selected from the group of hydrolysable radicals other than alkoxy and hydroxyl,
a, b and c are each integers between 0 and 3, and the sum of a, b and c makes 3.

43. Use of block copolymers of composition ABA with ≤4 olefinic groups in the individual A blocks,
**characterized in that** in accordance with Claim 36 immediately after the polymerization or after purification of the olefinically functionalized block copolymer the olefinic functionalities in the A blocks are converted into a further functionality by means of an addition reaction or oxidation reaction,
in reactive hot-melt adhesives or in adhesive bonding compositions.

44. Use of block copolymers of composition ABA with ≤4 olefinic groups in the individual A blocks, **characterized in that** in accordance with Claim 36 immediately after the polymerization or after purification of the olefinically functionalized block copolymer the olefinic functionalities in the A blocks are converted into a further functionality by means of an addition reaction or oxidation reaction,
in sealants for applications in the fields of automotive engineering, shipbuilding, container construction, mechanical engineering and aircraft engineering, and also in the electrical industry and in the building of domestic appliances.

45. Use of block copolymers of composition ABA with ≤4 olefinic groups in the individual A blocks,
**characterized in that** in accordance with Claim 36 immediately after the polymerization or after purification of the olefinically functionalized block copolymer the olefinic functionalities in the A blocks are converted into a further functionality by means of an addition reaction or oxidation reaction,
in sealants for building applications.

46. Use of block copolymers of composition ABA with ≤4 olefinic groups in the individual A blocks,
**characterized in that** in accordance with Claim 36 immediately after the polymerization or after purification of the olefinically functionalized block copolymer the olefinic functionalities in the A blocks are converted into a further functionality by means of an addition reaction or oxidation reaction,
in heat-sealing applications.

## Revendications

1. Copolymères séquencés de composition ABA ayant un nombre ≤ 4 de groupes oléfiniques dans les séquences A individuelles, **caractérisés en ce qu'**une séquence A, un copolymère contenant des (méth)acrylates fonctionnalisés oléfiniquement et des monomères choisis dans le groupe des (méth)acrylates ou leurs mélanges et une
séquence B, contenant des (méth)acrylates ou leurs mélanges, qui ne comportent aucune fonction oléfinique supplémentaire, sont polymérisés en tant que copolymères séquencés ABA.

2. Copolymères séquencés selon la revendication 1, **caractérisés en ce que** les copolymères séquencés contiennent dans la séquence A et/ou dans la séquence B des monomères polymérisables par ATRP qui n'appartiennent pas au groupe des (méth)acrylates.

3. Copolymères séquencés selon la revendication 1, **caractérisés en ce que** les copolymères séquencés contiennent des monomères polymérisables par ATRP qui n'appartiennent pas au groupe des (méth)acrylates en quantités de 0 à 50 % en poids dans les séquences A et/ou B.

4. Copolymères séquencés selon la revendication 1, **caractérisés en ce que** les séquences A individuelles des copolymères séquencés ABA présentent une composition ayant un nombre ≤ 2 de groupes oléfiniques.

5. Copolymères séquencés selon la revendication 1, **caractérisés en ce que** les séquences A individuelles représentent moins de 20 % du poids total du copolymère séquencé ABA.

6. Copolymères séquencés selon la revendication 5, **caractérisés en ce que** les séquences A individuelles représentent moins de 10 % du poids total du copolymère séquencé ABA.

7. Copolymères séquencés selon la revendication 6, **caractérisés en ce que** les séquences A individuelles représentent moins de 5 % du poids total du copolymère séquencé ABA.

8. Copolymères séquencés selon la revendication 1, **caractérisés en ce que** les séquences A individuelles peuvent présenter à leur tour une structure diséquencée AC et conduire ainsi à des copolymères pentaséquencés ACBCA.

9. Copolymères séquencés selon la revendication 8, **caractérisés en ce que** la composition des séquences C correspond à la composition de la partie non fonctionnalisée oléfiniquement des séquences A.

10. Copolymères séquencés selon la revendication 1, **caractérisés en ce que** les monomères utilisés pour la fonctionnalisation des segments A contiennent deux groupes insaturés polymérisables par voie radicalaire.

11. Copolymères séquencés selon la revendication 10, **caractérisés en ce que** les deux groupes polymérisables par voie radicalaire des monomères utilisés pour la fonctionnalisation sont différents et disposent de différentes activités de polymérisation.

12. Copolymères séquencés selon la revendication 11, **caractérisés en ce que** les monomères utilisés pour la fonctionnalisation sont de préférence choisis dans le groupe des (méth)acrylates qui portent une fonctionnalité oléfinique supplémentaire.

13. Copolymères séquencés selon la revendication 12, **caractérisés en ce que** les monomères utilisés pour la fonctionnalisation sont de préférence le méthacrylate d'allyle ou l'acrylate d'allyle.

14. Copolymères séquencés selon la revendication 1, **caractérisés en ce que** le polymère est exempt de soufre.

15. Copolymères séquencés selon la revendication 1, **caractérisés en ce que** les (méth)acrylates sont de préférence choisis dans le groupe des (méth)acrylates d'alkyle d'alcools linéaires, ramifiés ou cycloaliphatiques comportant 1 à 40 atomes C, tels que par exemple le (méth)acrylate de méthyle, le (méth)acrylate d'éthyle, le (méth)acrylate de n-butyle, le (méth)acrylate d'i-butyle, le (méth)acrylate de t-butyle, le (méth)acrylate de 2-éthylhexyle, le (méth)acrylate de stéaryle, le (méth)acrylate de lauryle, le (méth)acrylate de cyclohexyle, le (méth)acrylate d'isobornyle, les (méth)acrylates d'aryle tels que par exemple le (méth)acrylate de benzyle ou le (méth)acrylate de phényle, qui peuvent à chaque fois comporter des radicaux aryles non substitués ou 1 à 4 fois substitués, les mono(méth)acrylates d'éthers, les polyéthylène glycols, les polypropylène glycols ou leurs mélanges comportant 5 à 80 atomes C, tels que par exemple le méthacrylate de tétrahydrofurfuryle, le méthacrylate de méthoxy(m)éthoxyéthyle, le méthacrylate de 1-butoxypropyle, le méthacrylate de cyclohexyloxyméthyle, le méthacrylate de benzyloxyméthyle, le méthacrylate de furfuryle, le méthacrylate de 2-butoxyéthyle, le méthacrylate de 2-éthoxyéthyle, le méthacrylate d'allyloxyméthyle, le méthacrylate de 1-éthoxybutyle, le méthacrylate de 1-éthoxyéthyle, le méthacrylate d'éthoxyméthyle, le (méth)acrylate d'éther méthylique de poly(éthylène glycol) ou le (méth)acrylate d'éther méthylique de poly(propylène glycol).

16. Copolymères séquencés selon la revendication 2, **caractérisés en ce que** les séquences A et/ou B peuvent contenir des esters de vinyle, des éthers de vinyle, des fumarates, des maléates, des styrènes, des acrylonitriles ou d'autres monomères polymérisables par ATRP.

17. Procédé de fabrication de copolymères séquencés de composition ABA ayant un nombre ≤ 4 de groupes oléfiniques dans les séquences A individuelles, **caractérisé en ce qu'**une séquence A, un copolymère contenant des (méth)acrylates fonctionnalisés oléfiniquement et des monomères choisis dans le groupe des (méth)acrylates ou leurs mélanges et une séquence B, contenant des (méth)acrylates ou leurs mélanges, qui ne comportent aucune fonction oléfinique supplémentaire, sont synthétisés par polymérisation radicalaire par transfert d'atomes (ATRP) en présence d'un initiateur et d'un catalyseur dans un solvant sans halogène.

18. Procédé de fabrication de copolymères séquencés selon la revendication 17, **caractérisé en ce que** l'initiateur est un initiateur bifonctionnel.

19. Procédé de fabrication de copolymères séquencés selon la revendication 18, **caractérisé en ce que** le 1,4-butanediol-di-(2-bromo-2-méthylpropionate), le 1,2-éthylèneglycol-di-(2-bromo-2-méthylpropionate), l'ester diéthylique de l'acide 2,5-dibromo-adipique ou l'ester diéthylique de l'acide 2,3-dibromo-maléique est utilisé de préférence en tant qu'initiateur bifonctionnel.

20. Procédé de fabrication de copolymères séquencés selon la revendication 17, **caractérisé en ce que** le copolymère séquencé de composition ABA est synthétisé par polymérisation séquentielle.

21. Procédé de fabrication de copolymères séquencés selon la revendication 17, **caractérisé en ce que** des composés de métaux de transition sont utilisés en tant que catalyseur.

22. Procédé de fabrication de copolymères séquencés selon la revendication 21, **caractérisé en ce que** des composés de cuivre, de fer, de rhodium, de platine, de ruthénium ou de nickel sont utilisés en tant que catalyseur.

23. Procédé de fabrication de copolymères séquencés selon la revendication 22, **caractérisé en ce que** des composés de cuivre sont utilisés en tant que catalyseur.

24. Procédé de fabrication de copolymères séquencés selon la revendication 17, **caractérisé en ce qu'**avant la polymérisation, le catalyseur est mis en contact avec un composé contenant de l'azote, de l'oxygène, du soufre ou du phosphore, qui peut former une ou plusieurs liaisons coordinatives avec le métal de transition pour obtenir un complexe métal-ligand.

25. Procédé de fabrication de copolymères séquencés selon la revendication 24, **caractérisé en ce que** des ligands chélateurs contenant N sont utilisés en tant que ligand.

26. Procédé de fabrication de copolymères séquencés selon la revendication 25, **caractérisé en ce que** la 2,2'-bipyridine, la N,N,N',N'',N''-pentaméthyldiéthylènetriamine (PMDETA), la tris(2-aminoéthyl)amine (TREN), la N,N,N',N'-tétraméthyléthylènediamine ou la 1,1,4,7,10,10-hexaméthyltriéthylènetétramine est utilisée en tant que ligand.

27. Procédé de fabrication de copolymères séquencés selon la revendication 17, **caractérisé en ce que** les monomères utilisés pour la fonctionnalisation sont polymérisés sans que des réactions de réticulation n'aient lieu.

28. Procédé de fabrication de copolymères séquencés selon la revendication 17, **caractérisé en ce que** le copolymère séquencé présente un poids moléculaire moyen en nombre compris entre 5 000 g/mol et 100 000 g/mol.

29. Procédé de fabrication de copolymères séquencés selon la revendication 17, **caractérisé en ce que** le copolymère séquencé présente de préférence un poids moléculaire moyen en nombre compris entre 7 500 g/mol et 25 000 g/mol.

30. Procédé de fabrication de copolymères séquencés selon la revendication 17, **caractérisé en ce que** le copolymère séquencé présente une distribution du poids moléculaire inférieure à 1,6.

31. Procédé de fabrication de copolymères séquencés selon la revendication 17, **caractérisé en ce que** le copolymère séquencé présente de préférence une distribution du poids moléculaire inférieure à 1,4.

32. Utilisation de copolymères séquences de composition ABA ayant un nombre ≤ 4 de groupes oléfiniques dans les séquences A individuelles, **caractérisée en ce qu'**une séquence A, un copolymère contenant des (méth)acrylates fonctionnalisés oléfiniquement et des monomères choisis dans le groupe des (méth)acrylates ou leurs mélanges et une
séquence B, contenant des (méth)acrylates ou leurs mélanges, qui ne comportent aucune fonction oléfinique, sont polymérisés en tant que copolymères séquencés ABA, dans des adhésifs thermofusibles réactifs ou dans des matériaux adhésifs.

33. Utilisation de copolymères séquences de composition ABA ayant un nombre ≤ 4 de groupes oléfiniques dans les séquences A individuelles, **caractérisée en ce qu'**une séquence A, un copolymère contenant des (méth)acrylates fonctionnalisés oléfiniquement et des monomères choisis dans le groupe des (méth)acrylates ou leurs mélanges et une
séquence B, contenant des (méth)acrylates ou leurs mélanges, qui ne comportent aucune fonction oléfinique, sont polymérisés en tant que copolymères séquencés ABA, dans des matériaux d'étanchéité pour des applications dans les domaines de la construction d'automobiles, de bateaux, de conteneurs, de machines et d'avions, ainsi que dans l'industrie électronique et pour la fabrication d'appareils ménagers.

34. Utilisation de copolymères séquencés de composition ABA ayant un nombre ≤ 4 de groupes oléfiniques dans les séquences A individuelles, **caractérisée en ce qu'**une séquence A, un copolymère contenant des (méth)acrylates fonctionnalisés oléfiniquement et des monomères choisis dans le groupe des (méth)acrylates ou leurs mélanges et une
séquence B, contenant des (méth)acrylates ou leurs mélanges, qui ne comportent aucune fonction oléfinique, sont polymérisés en tant que copolymères séquencés ABA, dans des matériaux d'étanchéité pour des applications dans la construction.

35. Utilisation de copolymères séquences de composition ABA ayant un nombre ≤ 4 de groupes oléfiniques dans les séquences A individuelles,
**caractérisée en ce qu'**une séquence A, un copolymère contenant des (méth)acrylates fonctionnalisés oléfiniquement et des monomères choisis dans le groupe des (méth)acrylates ou leurs mélanges et une
séquence B, contenant des (méth)acrylates ou leurs mélanges, qui ne comportent aucune fonction oléfinique, sont polymérisés en tant que copolymères séquencés ABA, dans des applications de thermoscellage.

36. Utilisation de copolymères séquencés de composition ABA ayant un nombre ≤ 4 de groupes oléfiniques dans les séquences A individuelles, **caractérisée en ce qu'**une séquence A, un copolymère contenant des (méth)acrylates fonctionnalisés oléfiniquement et des monomères choisis dans le groupe des (méth)acrylates ou leurs mélanges et une
séquence B, contenant des (méth)acrylates ou leurs mélanges, qui ne comportent aucune fonction oléfinique, sont polymérisés en tant que copolymères séquencés ABA, pour la réaction supplémentaire des groupes oléfiniques.

37. Utilisation de copolymères séquencés de composition ABA ayant un nombre ≤ 4 de groupes oléfiniques dans les séquences A individuelles selon la revendication 36, **caractérisée en ce que** directement après la polymérisation ou après une purification du copolymère séquencé fonctionnalisé oléfiniquement, les fonctionnalités oléfiniques des séquences A sont transformées en une autre fonctionnalité par une réaction d'addition ou d'oxydation.

38. Utilisation de copolymères séquencés de composition ABA ayant un nombre ≤ 4 de groupes oléfiniques dans les séquences A individuelles selon la revendication 37, **caractérisée en ce que** la réaction ultérieure est une oxydation en groupes OH.

39. Utilisation de copolymères séquencés de composition ABA ayant un nombre ≤ 4 de groupes oléfiniques dans les séquences A individuelles selon la revendication 37, **caractérisée en ce que** la réaction ultérieure est une époxydation.

40. Utilisation de copolymères séquencés de composition ABA ayant un nombre ≤ 4 de groupes oléfiniques dans les séquences A individuelles selon la revendication 37, **caractérisée en ce que** la réaction ultérieure est une réaction d'addition pour la liaison de radicaux organiques de taille importante.

41. Utilisation de copolymères séquencés de composition ABA ayant un nombre ≤ 4 de groupes oléfiniques dans les séquences A individuelles selon la revendication 37, **caractérisée en ce que** la réaction ultérieure est une hydrosilylation.

42. Utilisation de copolymères séquencés de composition ABA ayant un nombre ≤ 4 de groupes oléfiniques dans les séquences A individuelles selon la revendication 41, **caractérisée en ce que** la réaction ultérieure est une hydrosilylation avec des composés de formule
HSi(OR¹)_{b}R²ₐX_{c}
dans laquelle les radicaux organiques R¹ et R² sont à chaque fois identiques ou différents l'un de l'autre et choisis dans le groupe des radicaux hydrocarbonés aliphatiques constitués de 1 à 20 atomes de carbone qui sont linéaires, ramifiés ou cycliques, R¹ pouvant également être exclusivement l'hydrogène,
X est choisi dans le groupe des radicaux hydrolysables, qui sont différents d'alcoxy ou hydroxy,
a, b et c sont chacun des nombres entiers compris entre 0 et 3 et la somme de a, b et c vaut 3.

43. Utilisation de copolymères séquencés de composition ABA ayant un nombre ≤ 4 de groupes oléfiniques dans les séquences A individuelles, **caractérisée en ce que**, selon la revendication 36, directement après la polymérisation ou après une purification du copolymère séquencé fonctionnalisé oléfiniquement, les fonctionnalités oléfiniques des séquences A sont transformées en une autre fonctionnalité par une réaction d'addition ou d'oxydation,
dans des adhésifs thermofusibles réactifs ou dans des matériaux adhésifs.

44. Utilisation de copolymères séquencés de composition ABA ayant un nombre ≤ 4 de groupes oléfiniques dans les séquences A individuelles, **caractérisée en ce que**, selon la revendication 36, directement après la polymérisation ou après une purification du copolymère séquencé fonctionnalisé oléfiniquement, les fonctionnalités oléfiniques des séquences A sont transformées en une autre fonctionnalité par une réaction d'addition ou d'oxydation,
dans des matériaux d'étanchéité pour des applications dans les domaines de la construction d'automobiles, de bateaux, de conteneurs, de machines et d'avions, ainsi que dans l'industrie électronique et pour la fabrication d'appareils ménagers.

45. Utilisation de copolymères séquencés de composition ABA ayant un nombre ≤ 4 de groupes oléfiniques dans les séquences A individuelles, **caractérisée en ce que**, selon la revendication 36, directement après la polymérisation ou après une purification du copolymère séquencé fonctionnalisé oléfiniquement, les fonctionnalités oléfiniques des séquences A sont transformées en une autre fonctionnalité par une réaction d'addition ou d'oxydation,
dans des matériaux d'étanchéité pour des applications dans la construction.

46. Utilisation de copolymères séquencés de composition ABA ayant un nombre ≤ 4 de groupes oléfiniques dans les séquences A individuelles, **caractérisée en ce que**, selon la revendication 36, directement après la polymérisation ou après une purification du copolymère séquencé fonctionnalisé oléfiniquement, les fonctionnalités oléfiniques des séquences A sont transformées en une autre fonctionnalité par une réaction d'addition ou d'oxydation,
dans des applications de thermoscellage.
